# EUROPEAN PATENT SPECIFICATION

(11) **EP 1 437 296 B1**
(45) Date of publication and mention of the grant of the patent: **16.03.2011**
(21) Application number: 02760750.6
(22) Date of filing: 26.08.2002
(51) Int. Cl.: B63H 25/30, F16J 15/32, F15B 15/12

(54) **SEALING STRUCTURE FOR ROTARY VANE TYPE STEERER**
DICHTUNGSKONSTRUKTION FÜR DREHSCHIEBER-RUDER
STRUCTURE D'ETANCHEITE POUR APPAREIL A GOUVERNER DE TYPE ROTATIF A PALETTES

(30) Priority: 11.09.2001 JP 2001274369; 04.07.2002 JP 2002195314
(43) Date of publication of application: 14.07.2004
(73) Proprietor: Japan Hamworthy & Co., Ltd, Osaka-shi, Osaka 536-0014 (JP)
(72) Inventor: TOMITA, Yukio, JAPAN HAMWORTHY & CO., LTD., Joto-ku, Osaka-shi, Osaka 536-0014 (JP); EGUCHI, Yoshimasa, JAPAN HAMWORTHY & CO., LTD., Joto-ku, Osaka-shi, Osaka 536-0014 (JP); MORIMOTO, Takashi, JAPAN HAMWORTHY & CO., LTD., Joto-ku, Osaka-shi, Osaka 536-0014 (JP); WAKABAYASHI, Takanori, JAPAN HAMWORTHY & CO., LTD., Joto-ku, Osaka-shi, Osaka 536-0014 (JP)
(74) Representative: Grünecker, Kinkeldey, Stockmair & Schwanhäusser Anwaltssozietät
(86) International application number: PCT/JP2002/008583
(87) International publication number: WO 2003/024787

(56) References cited:
- JP-A- 11 255 197
- JP-A- 62 001 693
- JP-A- 2001 324 025
- JP-B1- 3 007 082

## Description

### Technical Field to Which the Invention Pertains

The present invention is concerned with technology of marine steering gears, and relates to seal construction of a rotary vane steering gear.

### Background of the Invention

The closest state of the art is considered to be represented by the document JP 300 70 82.

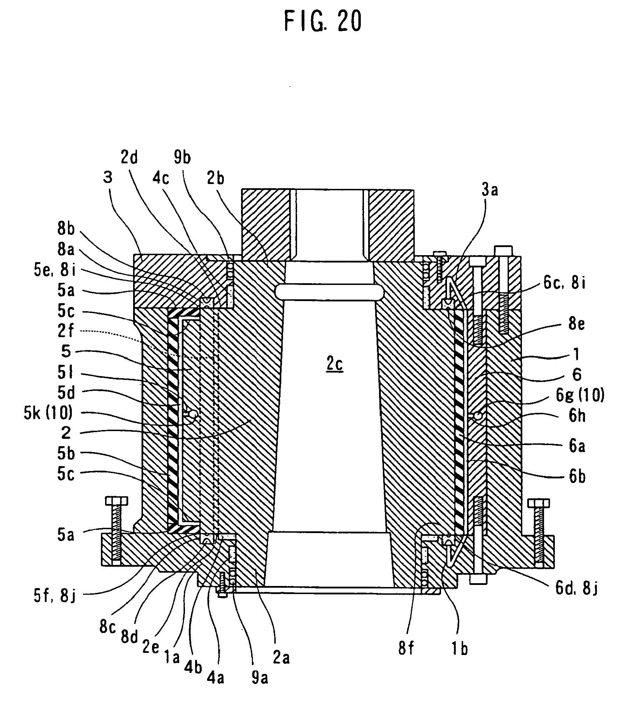

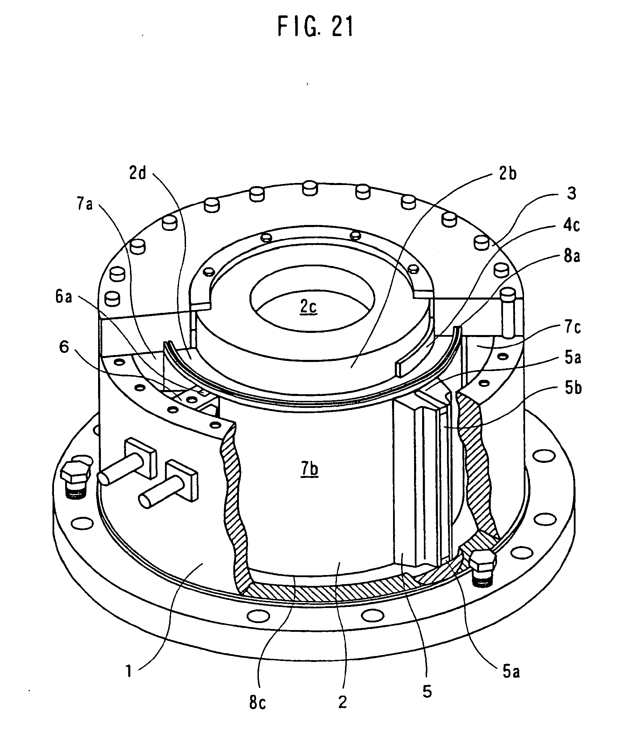

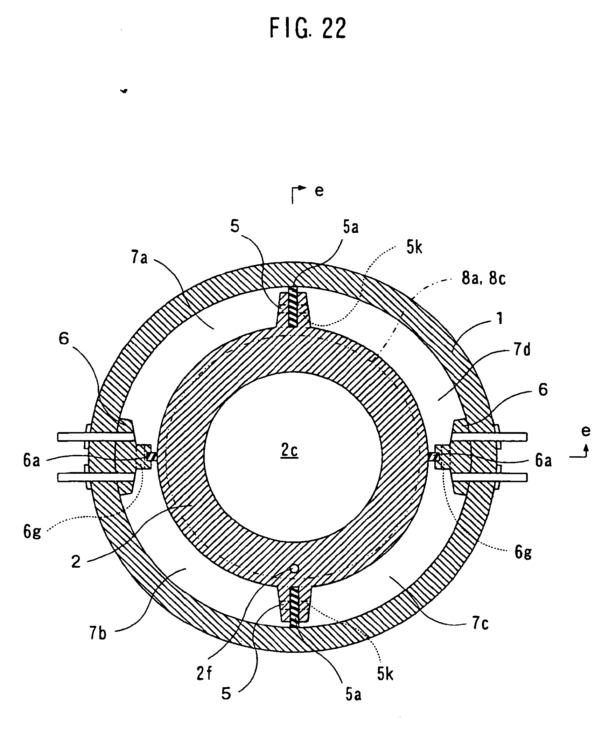

A rotary vane steering gear of a prior art is such that, as shown in Fig. 20 - Fig. 22 for example, a housing 1 and a rotor 2 accommodated inside the housing are primary portions. The rotor 2 is so supported that its lower neck 2a is supported by a boss portion 1a provided in the bottom of the housing 1 and its upper neck 2b is supported by a top cover 3 of circular shape arranged at the upper opening of the housing 1. A radial bearing 4a and a thrust bearing 4b are set inside between the boss portion 1a and the lower neck 2a, and a radial bearing 4c is set inside between the top cover 3 and the upper neck 2b, and thus the rotor 2 is free rotatable inside the housing 1 fixed to a hull under a condition that it is loaded radially and axially.

The rotor 2 has a piercing hole 2c, inside which a rudderstock (illustration is omitted) is set, and protrudes plural vanes 5 on the outer periphery at the equal intervals circumferentially. The housing 1 protrudes as many segments 6 as the abovementioned vanes 5 on the inner periphery at the equal intervals circumferentially.

The respective vane 5 of the rotor 2 holds a horizontal seal 5a made of elastic material in a horizontal slit 5c formed on an upper and a lower end faces of the vane so as to slidingly contact with the lower surface of the top cover 3 and the inner bottom surface of the housing 1, respectively, and holds a vertical seal 5b made of elastic material in a vertical slit 5d formed on the radial end face of the vane so as to slidingly contact with the inner periphery of the housing 1. The respective segment 6 of the housing holds a vertical seal 6a made of elastic material in a vertical slit 6b formed on the radial end face of the segment so as to slidingly contact with the outer periphery of the rotor 2.

The rotor 2 rotates in the housing 1 under a condition that the respective horizontal seal 5a slidingly contacts with the lower surface of the top cover 3 and the inner bottom surface of the housing 1, respectively, the respective vertical seal 5b slidingly contacts with the inner periphery of the housing 1, and the respective vertical seal 6a of the segment 6 slidingly contacts with the outer periphery of the rotor 2, and thus oil chambers 7a, 7b, 7c, 7d are formed between the vanes 5 and the segments 6.

In order to prevent pressure oil in the oil chambers 7a, 7b, 7c, 7d from leaking into the adjacent oil chambers 7a, 7b, 7c, 7d and the rotor's necks 2a, 2b, that lead to the atmosphere, through a micro gap between an upper end face 2d of the rotor 2 and the top cover 3, and a micro gap between a lower end face 2e of the rotor 2 and the housing 1, the top cover 3 holds an upper ring seal 8a made of elastic material in a slit 8b formed on a part facing the upper end face 2d of the rotor 2, and the housing 1 holds a lower ring seal 8c made of elastic material in a slit 8d formed on a part facing the lower end face 2e of the rotor 2 so that sealing function is performed, with a sealing face 8e of the upper ring seal 8a contacting the upper end face 2d of the rotor, and a sealing face 8f of the lower ring seal 8c contacting the lower end face 2e of the rotor.

An outer peripheral edge 8i of the upper ring seal 8a contacts upper inner edges 5e of the horizontal seals 5a of the vanes 5 and upper inner edges 6c of the vertical seals 6a of the segments 6, respectively. An outer peripheral edge 8i of the lower ring seal 8c contacts lower inner edges 5f of the horizontal seals 5a of the vanes 5 and lower inner edges 6d of the vertical seals 6a of the segments 6, respectively.

The oil chambers 7a and 7c and the oil chambers 7b and 7d that are polar against the rotating center of the rotor 2 are communicatively connected each other; for instance, when pressure oil from an oil pump is fed to the oil chamber 7a, it is also fed to the oil chamber 7c that is in polar position at the same time, and on the other hand, oil in the other oil chambers 7b and 7d is discharged at the same time and returned to the oil pump side. Thus rotation of the rotor 2 by pressure oil is realized.

In order to secure oil tightness of the respective oil chambers 7a, 7b, 7c, 7d, pressure oil led from the oil chambers 7a, 7b, 7c, 7d is applied to the respective rear of the upper and lower horizontal seals 5a and the vertical seal 5b provided on the radial end face of the vane 5, the vertical seal 6a provided on the radial end face of the segment 6 of the housing, and the upper and lower ring seals 8a, 8c so that the respective slidingly contacting parts are pushed against the opposite faces.

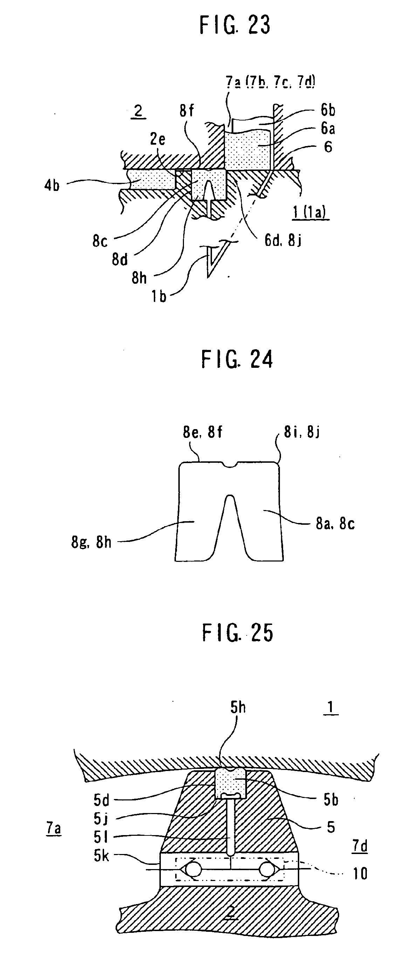

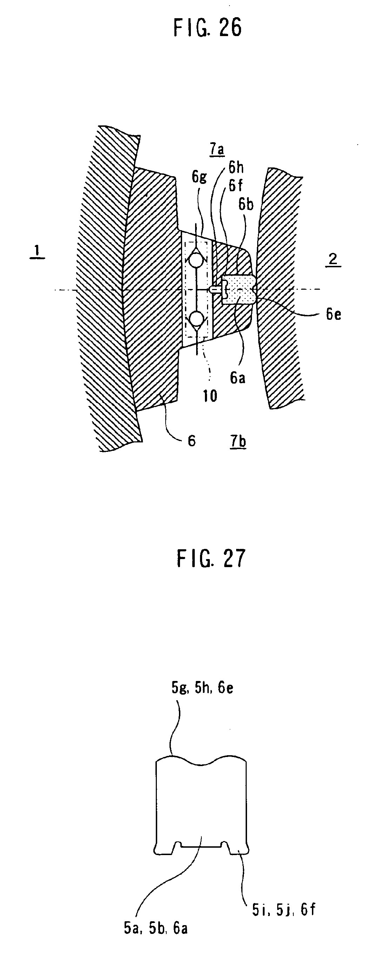

Namely, sectional profiles of the respective seals 5a, 5b, 6a, 8a, 8c are as shown in Fig.23 - Fig. 27, in which sealing ability is given by pushing the respective sealing faces 5g, 5h, 6e, 8e, 8f that slidingly contact the counter-faces, with pressure oil led from the oil chambers 7a, 7b, 7c, 7d being applied to the rear of the sealing faces.

At the same time, this pressure oil acts on respective skirts 5i, 5j, 6f, 8g, 8h, and pushes them against the both lateral faces of the respective slits 5c, 5d, 6b, 8b, 8d, and by means of this, it is prevented for the pressure oil to leak to the low pressure sides through gaps between the respective slits 5c, 5d, 6b, 8b, 8d and the respective seals 5a, 5b, 6a, 8a, 8c.

Means to lead the pressure oil from the oil chambers 7a, 7b, 7c, 7d to the rear of the respective seals 5a, 5b, 6a, 8a, 8c are as follows:

Namely, the oil chambers 7a and 7d are communicatively connected, and the oil chambers 7b and 7c are so, respectively, by means of an oil chamber communicative hole 5k provided on the respective vane 5; the respective oil chamber communicative hole 5k is communicatively connected to the bottom surface of the vertical slit 5d by means of a communicative hole 51 provided at the peripheral center of the vane; the vertical slit 5d and the horizontal slit 5c form a communicative space; the oil chamber communicative hole 5k wears a pressure valve 10; and whichever the oil chamber 7a or 7d becomes pressure side, and whichever the oil chamber 7b or 7c becomes pressure side, the pressure oil acts on the rear of the horizontal seals 5a and the vertical seal 5b.

Furthermore, the oil chambers 7a and 7b are communicatively connected, and the oil chambers 7c and 7d are so, respectively, by means of an oil chamber communicative hole 6g provided on the respective segment 6; the respective oil chamber communicative hole 6g is communicatively connected to the bottom surface of the vertical slit 6b by means of a communicative hole 6h provided at the peripheral center of the segment; the oil chamber communicative hole 6g wears a pressure valve 10; and whichever the oil chamber 7a or 7b becomes pressure side, and whichever the oil chamber 7c or 7d becomes pressure side, the pressure oil acts on the rear of the vertical seal 6a.

Furthermore, oil passes 3a, 1b are provided to communicatively connect the bottom surface of the respective slits 8b, 8d, that accommodate the respective ring seals 8a, 8c, to the bottom surface of the vertical slit 6b of the segment 6, and the pressure oil acting on the rear of the vertical seal 6a of the segment 6 simultaneously acts on the rear of the upper and lower ring seals 8a, 8c.

Accordingly, when the oil chambers 7a and 7c, for instance, become pressure side oil chambers, the pressure oil in these oil chambers acts on the rear of the vertical seals 5b and the horizontal seals 5a of the vanes 5 through the valves of the pressure valves 10 that are on the sides of the oil chamber 7a and the oil chamber 7c, and oil tightness is secured, with the vertical seals 5b and the horizontal seals 5a being pushed against the inner periphery of the housing 1, the lower surface of the top cover 3 and the inner bottom surface of the housing 1, respectively, and at the same time, against both lateral faces of the slits 5c, 5d.

This pressure oil in the oil chambers simultaneously acts on the rear of the vertical seals 6a of the segments 6 through the valves of the pressure valves 10 that are on the sides of the oil chamber 7a and the oil chamber 7c, and oil tightness is secured, with the vertical seals 6a being pushed against the outer periphery of the rotor 2, that is a slidingly moving face, and both lateral faces of the slits 6b.

Furthermore, the pressure oil acts on the respective rear of the upper and lower ring seals 8a, 8c through the oil passes 3a, 1b, and oil tightness is secured, with the sealing faces 8e, 8f of the ring seals 8a, 8c being pushed against the upper end face 2d and the lower end face 2e of the rotor 2, that are slidingly moving faces; with the skirts 8g, 8h being pushed against both lateral faces of the slits 8b, 8d; and, with the respective outer peripheral edges 8i, 8j of the upper ring seal 8a and the lower ring seal 8c being pushed against the upper and lower inner edges 5e, 5f of the upper and lower horizontal seals 5a of the rotor vanes, and against the upper and lower inner edges 6c, 6d of the vertical seals 6a of the housing segments, respectively.

The abovementioned sealing function is based on such an idea that the higher oil pressure in an oil chamber becomes, the more amount of leakage from the oil chamber tends toward an increase, but on the other hand, force applied to the rear of a seal, by which a seal is pushed against a slidingly moving face, becomes larger, and consequently, an increase in amount of leakage can be avoided.

Furthermore, the rotor 2 is provided with a balancing hole 2f that communicatively connects the upper surface of the rotor at the inside of the upper ring seal 8a with the lower surface of the rotor at the inside of the lower ring seal 8c, and in case of leakage of pressure oil from either the upper or lower ring seal 8a, 8c, it serves to make pressure acting on the upper and lower surface of the rotor equalize in the upper and lower direction. Accordingly, it prevents the rotor 2 from suffering unbalanced force caused by differential pressure in the axial direction.

Furthermore, in order not to make the abovementioned leaked oil leak to the outside through a gap between the lower neck 2a of the rotor and the boss portion 1a of the housing, or a gap between the upper neck 2b of the rotor and the top cover 3, a lower gland seal 9a and an upper gland seal 9b of such construction that two or three O-rings are piled up are provided.

In the aforementioned constitution of a prior art, it is necessary that the respective sealing faces 5g, 5h, 6e, 8e, 8f of the respective seals 5a, 5b, 6a, 8a, 8c are kept at such proper contact pressure that on one hand it gives enough sliding contact pressure so as not to make pressure oil leak into the low pressure sides, and on the other hand the contact pressure does not become excessive, destroy lubrication films, and generate unnecessary friction loss and wearing out, or give damage to the seals in an extreme case.

Furthermore, even when load on a steering gear is low and only low oil pressure or no pressure is generated in the oil chambers 7a, 7b, 7c, 7d, the respective sealing faces 5g, 5h, 6e, 8e, 8f of the seals 5a, 5b, 6a, 8a, 8c should be given contact pressure at the minimum for avoiding leakage.

In the aforementioned constitution, when a certain oil pressure acts on the rear of the respective seals 5a, 5b, 6a, 8a, 8c, force is generated in such a direction as to push the respective sealing faces 5g, 5h, 6e, 8e, 8f against the counter-faces slidingly moving, and gives them necessary contact pressure for sealing, and at the same time, force is also generated in such a direction as to push the respective skirts 5i, 5j, 6f, 8g, 8h against both lateral faces of the respective slits 5c, 5d, 6b, 8b, 8d, and gives them necessary contact pressure for preventing the pressure oil from leaking through gaps between the seals and the slits.

However, this contact pressure between the skirts and the lateral faces of the slit generates friction force to counteract movement of the seal in the direction toward pushing the seal against the counter-face slidingly moving, and exerts an influence on slidingly contact pressure of the respective sealing faces 5g, 5h, 6e, 8e, 8f. In other words, there has been such a problem that, if it is tried to strengthen sealing ability of the respective skirts 5i, 5j, 6f, 8g, 8h, sealing ability of the respective sealing faces 5g, 5h, 6e, 8e, 8f will decrease, and vice versa.

Accordingly, in order to keep both, that have contradictious conditions each other, at compatible value, very hard design has been necessitated.

On the other hand, in order for the respective sealing faces 5g, 5h, 6e, 8e, 8f to be given necessary contact pressure for preventing oil from leaking, even when oil pressure acting on the rear of the respective seals 5a, 5b, 6a, 8a, 8c is low or zero, dimensional tolerance for making the respective seals 5a, 5b, 6a, 8a, 8c loosely fit into the respective slits 5c, 5d, 6b, 8b, 8d should be strictly observed. This tolerance also exerts an influence on performance even when the aforementioned oil pressure exists enough.

However, there has been a problem that it is very difficult to manufacture the respective seals 5a, 5b, 6a, 8a, 8c made of elastic materials with strict dimensional tolerance.

As mentioned above, there has been a problem that, because of considerable difficulty in designing and manufacturing the respective seals 5a, 5b, 6a, 8a, 8c so as to satisfy all the conditions, inequality in performance is generated, and as a result, some ones cause leakage, some ones suffer abnormal wearing out, and in the extreme, they can be damaged.

With respect to the ring seals 8a, 8c, such an additional condition should be taken into consideration that contact between the outer peripheral edges 8i, 8j of the ring seals and the inner edges 5e, 5f of the horizontal seals 5a of the vanes 5, and contact between the outer peripheral edges 8i, 8j of the ring seals and the inner edges 6c, 6d of the vertical seals 6a of the segments 6 should be properly maintained, regardless of existence of oil pressure, so as to prevent oil from leaking through these parts from the high pressure oil chambers 7a and 7c, for instance, to the low pressure oil chambers 7b and 7d.

However, the ring seals 8a, 8c of a previous art have no positive countermeasures against the force pushing the seals in the radial direction caused by oil pressure acting on the outer peripheral edges 8i, 8j and there has been a problem that occurrence of some leakage to the oil chambers of low pressure side through these parts is unavoidable.

Furthermore, there has been a problem that the oil passes 3a, 1b for leading working oil pressure from the vertical slit 6b of the segment to the rear of the ring seals 8a, 8c require complicated machining in order to drill to an accurate position.

Furthermore, with respect to the vertical seals 6a of the segments 6, machining of the communicative holes 6g, 6h for leading working oil pressure to the rear of the vertical seals 6a is very difficult, if the segments 6 are of one-piece construction with the housing 1, because such machining is to be made in the vicinity of the inner periphery of cylindrical body. Accordingly, the segments 6 have been unavoidably made separate from the housing 1, and worn by the housing after machining. However, there has been a problem that there is a case, depending on steering gear size, etc., where such separately wearing construction becomes expensive, and that there is a case where it is difficult to secure a space for their fitting bolts, and such constitution as making it possible to make the segments one-piece construction with the housing has been desired.

The present invention resolves the aforementioned problems and aims at offering such construction of seals of a rotary vane steering gear as to make possible of design that can satisfy all the conditions simultaneously, including the contradictious conditions each other as aforementioned; make it possible to be less influenced by the problem of poor manufacturing tolerance of the seals made of elastic materials; and accordingly, make it possible to improve sealing performance, prevent the seals from suffering damage, improve reliability and rationalize cost.

### Disclosure of Invention

In order to resolve the aforementioned problems, the present invention of seal construction of a rotary vane steering gear in the claim 1 is constituted so that:
in a rotary vane steering gear that is composed of a rotor, into which a rudderstock is fitted, a housing that accommodates the rotor and forms space for oil chambers in the circumferences of the rotor, and a ring-shaped top cover arranged at an upper opening of the housing, and is so constituted that plural vanes are arranged at equal intervals along circumferential direction on the outer periphery of the rotor, plural segments are arranged at equal intervals along circumferential direction on the inner periphery of the housing, the aforementioned space for oil chambers is divided into plural oil chambers by the vanes and the segments, a balancing hole that opens to the upper and lower end faces of the rotor is provided, a ring-shaped slit is formed on the inner bottom surface of the housing and the lower surface of the top cover, respectively, so as to face the end faces of the rotor, and a ring seal made of elastic material is arranged in the ring-shaped slits, respectively, so that their sealing face contacts the end face of the rotor with proper contact pressure,
a ring groove is formed at the outer side of the bottom of a ring slit; a ring seal is composed of a cylindrical portion fitted into the ring groove, and a ring lip that radially protrudes from the cylindrical portion toward the inner side to the extent it reaches the lateral face of the ring slit, and in a manner that its tip portion vertically protrudes over the end face of the cylindrical portion toward the end face of the rotor in the free condition; the balancing hole is communicatively connected to the oil chambers of pressure side; and the openings of the balancing hole are arranged so as to be inside the inner peripheral edges of the ring slits.

Thanks to the aforementioned constitution in accordance with the present invention, though working oil pressure in the oil chambers acts on an outer peripheral edge of the cylindrical portion of the ring seal, and the ring seal is repeatedly pushed at the outer periphery of the cylindrical portion toward the inner periphery side according to variation of the working oil pressure in the respective oil chambers, the working oil pressure simultaneously acts on the inner periphery of the cylindrical portions and the rear of the ring lips of the upper and lower ring seals, because the oil chambers that have become pressure side are communicatively connected to the space between the lower surface of the top cover and the upper end face of the rotor and the space between the inner bottom surface of the housing and the lower end face of the rotor through the balancing hole of the rotor, and pushes the outer periphery of the cylindrical portion against the outer periphery of the ring slit and the ring groove over the whole circumference, and simultaneously pushes the ring lip against the rotor end face over the whole circumference.

By virtue of this, it is avoidable that high pressure working oil in the oil chambers of high pressure side leaks into the adjacent oil chambers of low pressure side through the sealing face because the sealing face of the cylindrical portion of the ring seal contacts the rotor end face with proper contact pressure, and at the same time, it is avoidable that the high pressure working oil in the oil chambers of high pressure side leaks into the adjacent oil chambers of low pressure side through the outer periphery of the cylindrical portion because the outer periphery of the cylindrical portion contacts the outer peripheries of the ring slit and the ring groove over the whole circumference by high pressure working oil.

Furthermore, it is avoidable that the high pressure working oil led to the inner periphery of the cylindrical portion and the rear of the ring lip leaks into the oil chambers of low pressure through the sealing face of the ring lip and the sealing face of the cylindrical portion because the ring lip is pushed against the rotor end face over the whole circumference.

In this constitution, the aforementioned performance can be exhibited without any problem only by taking such measures as to make proper contact pressure generate on the sealing face by giving the ring seal elastic compression in the condition that the ring seal is arranged in the ring slit and the rotor is worn, and manufacture the ring seal, setting dimensional tolerance on the basis of diameter of the outer periphery of the cylindrical portion of the ring seal. Accordingly, design and manufacturing of the seal become extremely easy, and highly reliable seal construction is realizable.

Furthermore, reduction in machining cost comes possible because the oil passes for leading oil pressure from the segment slits to the rear of the ring seals in a prior art, that require complicated machining, are deleted.

In this constitution, such a condition is brought that the upper and lower gland seals suffer high pressure working oil, instead of leaked oil in case of a prior art, because high pressure working oil is led to the inner periphery of the upper and lower ring seals, but leakage of the working oil outside can be avoided by means of making two O-rings independent respectively, and applying grease lubrication to the outer O-ring.

The present invention of seal construction of a rotary vane steering gear in the claim 2 is constituted so that:
in a rotary vane steering gear that is composed of a rotor, into which a rudderstock is fitted, a housing that accommodates the rotor and forms space for oil chambers in the circumferences of the rotor, and a ring-shaped top cover arranged at an upper opening of the housing, and is so constituted that plural vanes are arranged at equal intervals along circumferential direction on the outer periphery of the rotor, plural segments are arranged at equal intervals along circumferential direction on the inner periphery of the housing, the aforementioned space for oil chambers is divided into plural oil chambers by the vanes and the segments, a balancing hole that opens to the upper and lower end faces of the rotor is provided, a ring-shaped slit is formed on the inner bottom surface of the housing and the lower surface of the top cover, respectively, so as to face the end faces of the rotor, and a ring seal made of elastic materials is arranged in the ring-shaped slits, respectively, so that their sealing face contacts the end face of the rotor with proper contact pressure,
the ring seal is composed of a cylindrical portion fitted into the outer peripheral side of a ring slit, a ring lip that radially protrudes from the cylindrical portion toward the inner side to the extent it reaches the lateral face of the ring slit, and in a manner that its tip portion vertically protrudes over the end face of the cylindrical portion toward the side of the end face of the rotor in the free condition, and a bottom ring lip that radially protrudes from the cylindrical portion toward the inner side to the extent it reaches the lateral face of the ring slit, and in a manner that its tip portion vertically protrudes over another end face of the cylindrical portion toward the side of the bottom surface of the ring slit in the free condition; fixed space is formed between the ring lip and the bottom ring lip; the balancing hole is communicatively connected to the oil chambers of pressure side; and the openings of the balancing hole are arranged so as to be inside the inner peripheral edges of the ring slits.

Thanks to the aforementioned constitution in accordance with the present invention, though working oil pressure in the oil chambers acts on an outer peripheral edge of the cylindrical portion of the ring seal, and the ring seal is repeatedly pushed at the outer periphery of the cylindrical portion toward the inner periphery side according to variation of the working oil pressure in the respective oil chambers, the working oil pressure simultaneously acts on the inner periphery of the cylindrical portions and the space between the ring lip and the bottom ring lip of the upper and lower ring seals, because the oil chambers that have become pressure side are communicatively connected to the space between the lower surface of the top cover and the upper end face of the rotor and the space between the inner bottom surface of the housing and the lower end face of the rotor through the balancing hole of the rotor, and pushes the outer periphery of the cylindrical portion against the outer periphery of the ring slit over the whole circumference, and simultaneously, pushes the ring lip against the rotor end face over the whole circumference, and pushes the bottom ring lip against the bottom surface of the ring slit over the whole circumference.

By virtue of this, it is avoidable that high pressure working oil in the oil chambers of high pressure side leaks into the adjacent oil chambers of low pressure side through the sealing face because the sealing face of the cylindrical portion of the ring seal contacts the rotor end face with proper contact pressure, and at the same time, it is avoidable that the high pressure working oil in the oil chambers of high pressure side leaks into the adjacent oil chambers of low pressure side through the outer periphery of the cylindrical portion because the outer periphery of the cylindrical portion contacts the outer peripheries of the ring slit over the whole circumference by high pressure working oil.

Furthermore, it is avoidable that the high pressure working oil led to the space between the ring lip and the bottom ring lip leaks into the oil chambers of low pressure through the sealing face of the ring lip and the sealing face of the cylindrical portion, or through the sealing face of the bottom ring lip against the bottom surface of the ring slit, because the ring lip and the bottom ring lip are pushed against the rotor end face and the bottom surface of the ring slit, respectively. Other function and effects are similar to those relating to the claim 1 above.

The present invention of seal construction of a rotary vane steering gear in the claim 3 is constituted so that:
in a rotary vane steering gear that is composed of a rotor, into which a rudderstock is fitted, a housing that accommodates the rotor and forms space for oil chambers in the circumferences of the rotor, and a ring-shaped top cover arranged at an upper opening of the housing, and is so constituted that plural vanes are arranged at equal intervals along circumferential direction on the outer periphery of the rotor, plural segments are arranged at equal intervals along circumferential direction on the inner periphery of the housing, the aforementioned space for oil chambers is divided into plural oil chambers by the vanes and the segments, a balancing hole that opens to the upper and lower end faces of the rotor is provided, a ring-shaped slit is formed on the inner bottom surface of the housing and the lower surface of the top cover, respectively, so as to face the end faces of the rotor, and a ring seal made of elastic materials is arranged in the ring-shaped slits, respectively, so that their sealing face contacts the end face of the rotor with proper contact pressure,
the ring seal is composed of a ring portion set inside a ring slit at its surface side, an outer ring skirt that axially protrudes whole circumferentially from the ring portion at its end facing the outer periphery of the ring slit toward the bottom surface of the ring slit to the extent it reaches the bottom surface of the ring slit, and in a manner that its tip portion radially protrudes over the outer periphery of the ring portion toward the outer lateral face of the ring slit in the free condition, and an inner ring skirt that axially protrudes whole circumferentially from the ring portion at its end facing the inner periphery of the ring slit toward the bottom surface of the ring slit to the extent it reaches the bottom surface of the ring slit, and in a manner that its tip portion radially protrudes over the inner periphery of the ring portion toward the inner lateral face of the ring slit in the free condition; the ring seal is provided with indents in fixed width in appropriate numbers over the whole circumference on the inner periphery so as to extend from the top edge of the ring portion to the bottom edge of the inner ring skirt; the indents are communicatively connected to the space between the outer ring skirt and the inner ring skirt; the balancing hole is communicatively connected to the oil chambers of pressure side; and the openings of the balancing hole are arranged so as to be inside the inner peripheral edges of the ring slits.

Thanks to the aforementioned constitution in accordance with the present invention, though working oil pressure in the oil chambers acts on an outer peripheral edge of the ring portion of the ring seal, and the ring seal is repeatedly pushed at the outer periphery of the ring portion toward the inner periphery side according to variation of the working oil pressure in the respective oil chambers, the working oil pressure simultaneously acts on the indents extending over the ring portion of the upper and lower ring seals up to the inner ring skirt, because the oil chambers that become pressure side are communicatively connected to the space between the lower surface of the top cover and the upper end face of the rotor and the space between the inner bottom surface of the housing and the lower end face of the rotor through the balancing hole of the rotor, and pushes the outer periphery of the ring portion at the parts of the indents against the outer periphery of the ring slit over the whole circumference. The working oil pressure is also communicatively connected to the space between both ring skirts through the indents, and accordingly, it strengthens force to push the outer ring skirt against the outer periphery of the ring slit, and strengthens force to push the sealing face of the ring portion against the rotor end face.

By virtue of this, it is avoidable that high pressure working oil in the oil chambers of high pressure side leaks into the adjacent oil chambers of low pressure side through the sealing face of the ring portion of the ring seal, and simultaneously, through the outer periphery of the ring portion.

Furthermore, it is avoidable that the high pressure working oil led to the space between both ring skirts leaks into the oil chambers of low pressure side through a gap between the outer ring skirt and the outer periphery of the ring slit. Other function and effects are similar to those relating to the claim 1 above.

In this context, the inner ring skirt is pushed against the inner periphery of the ring slit by the force of high pressure working oil acting on the outer periphery of the inner ring skirt minus the force of high pressure working oil acting on the indent portions of the inner ring skirt at its inner periphery. However, the inner ring skirt does not take part in sealing function, but contributes to uniform compression of the ring seal when the ring seal is elastically pressed by the rotor end face.

The present invention of seal construction of a rotary vane steering gear in the claim 4 is constituted so that the ring seal is provided with indents in fixed width in appropriate numbers over the whole circumference on the inner periphery of the ring seal so that the indents extend from the top edge of the ring portion to the bottom edge of the inner ring skirt, and also provided with a ring groove in fixed width, to which the respective indents are communicatively connected at part of the ring portion.

Thanks to the aforementioned constitution in accordance with the present invention, when working oil pressure derived from the oil chambers of pressure side acts on the indents on the inner periphery of the ring seal, this working oil pressure simultaneously acts on the ring groove, to which the indents are communicatively connected at part of the ring portion, and accordingly, the outer periphery of the ring portion is pressed against the outer periphery of the ring slit over the whole circumference not only at part of the indents but also at part of the ring groove. By virtue of this, the force to push the ring portion against the outer periphery of the ring slit for preventing high pressure working oil in the oil chambers of high pressure side from leaking into the adjacent oil chambers of low pressure side through the outer periphery of the ring portion becomes larger than that in the case where only the indents are provided, and accordingly, the leakage is more effectively avoidable.

The present invention of seal construction of a rotary vane steering gear in the claim 5 is constituted so that the balancing hole of the rotor that opens to the upper and lower end faces of the rotor at the inner part of the inner peripheral edge of the ring slit for the ring seal is so arranged as to be within the vertical central plane of the vane, and a balancing hole connecting hole that communicatively connects the oil chamber communicative hole with the balancing hole is provided at the oil chamber communicative hole of the vane so as to be concentric with the communicative hole for the vertical slit of the vane.

Thanks to the aforementioned constitution in accordance with the present invention, a means to make the oil chamber of high pressure side communicatively connect the balancing hole of the rotor can be given, only with the drilling work, in which the communicative hole for the vertical slit of the vane is drilled from the bottom surface of the vertical slit up to the oil chamber communicative hole of the vane, being extended up to the balancing hole of the rotor. No other means is simpler in constitution than this means, and accordingly, this means makes it possible to dispense with attachment such as piping, etc., extremely ease manufacturing, and reduce cost.

The present invention of seal construction of a rotary vane steering gear in the claim 6 is constituted so that:
in a rotary vane steering gear that is composed of a rotor, into which a rudderstock is fitted, a housing that accommodates the rotor and forms space for oil chambers in the circumferences of the rotor, and a ring-shaped top cover arranged at an upper opening of the housing, and is so constituted that plural vanes are arranged at equal intervals along circumferential direction on the outer periphery of the rotor, plural segments are arranged at equal intervals along circumferential direction on the inner periphery of the housing, the aforementioned space for oil chambers is divided into plural oil chambers by the vanes and the segments,
a pair of vertical slits is formed in the vertical direction on the tip face of the segments so as to face the outer periphery of the rotor; vertical seals made of elastic material are arranged symmetrically in the vertical slits, respectively, so that a sealing face of the respective vertical seal contacts the outer periphery of the rotor with proper contact pressure; the respective vertical seal is composed of a base arranged in the vertical slit on the side of the segment center, a first lip that tangentially protrudes from the base toward the outside of the segment to the extent it reaches the lateral face of the vertical slit, leaving a little gap, and in a manner that its tip portion radially protrudes over the end face of the base toward the outer periphery of the rotor in the free condition, and a second lip that tangentially protrudes from the base toward the outside of the segment to the extent it reaches the lateral face of the vertical slit, and in a manner that its tip portion radially protrudes over another end face of the base toward the bottom surface of the vertical slit in the free condition; and fixed space is formed between the first lip and the second lip.

Thanks to the aforementioned constitution in accordance with the present invention, a pair of the vertical seals of the segment isolates the adjacent oil chambers, with the vertical seals contacting the outer periphery of the rotor. Working oil pressure in the oil chamber of high pressure side directly acts on the space between the first lip and the second lip of one vertical seal facing this high pressure oil chamber, and pushes the first lip against the outer periphery of the rotor, and simultaneously pushes the second lip against the bottom surface of the vertical slit.

Accordingly, it is avoidable that high pressure working oil in the high pressure oil chamber leaks into the low pressure oil chamber through a gap between the tip portion of the segment and the outer periphery of the rotor, and through a gap between the inner faces of the vertical slit of the segment and the outer faces of the vertical seal of the segment.

When the oil chamber that has been in a low pressure condition turns to a high pressure condition, the similar function is performed in another vertical seal, and it is avoidable that working oil from the high pressure oil chamber leaks into the low pressure oil chamber.

In this constitution, sealing function is performed, with force of high pressure working oil being directly utilized, and accordingly, the aforementioned performance can be exhibited without any problem only by making the first lip contact with the outer periphery of the rotor, and making the second lip contact with the bottom surface of the vertical slit respectively with proper contact pressure by means of elastic compression of the vertical seal in the condition that the vertical seal is arranged in the vertical slit and the rotor is worn, and a dimensional error in manufacturing the vertical seal that is unavoidable because of elastic material hardly exerts an influence upon sealing performance. Accordingly, design and manufacturing of the seal become extremely easy, and highly reliable seal construction is realized.

Furthermore, different from construction of a segment of a prior art, in which a segment has been unavoidably made separate from a housing and worn by the housing after machining, caused by necessity of machining an oil chamber communicative hole of the segment, one-piece construction of a segment and a housing becomes possible because the oil chamber communicative hole comes unnecessary, and thus segment fitting-bolts of a prior art come unnecessary, and rationalization of design is achievable.

The present invention of seal construction of a rotary vane steering gear in the claim 7 is constituted so that a rigid core member is buried into the base of the vertical seal in the axial direction, with the upper and lower end portions of the vertical seal being left as they are, and that the vertical seal is formed a little longer than the vertical slit in the free condition.

Thanks to the aforementioned constitution in accordance with the present invention, work for setting the vertical seal into the vertical slit of the segment in the condition that the rotor has been worn by the housing becomes easy and accurate because the vertical seal has rigidity at part of the base. Furthermore, in the operating condition that the housing wears the top cover, linearity of sliding contact between the first lip and the outer periphery of the rotor, and contact between the second lip and the bottom surface of the vertical slit can be secured because the base, the first lip and the second lip do not bend in the circumferential and radial directions at part corresponding to the core member of the vertical seal, and uniformity and non-inclination of contact of the top and bottom end faces of the vertical seal against the rear of the top cover and the inner bottom surface of the housing, respectively, can be secured because only the top and bottom portions of the vertical seal are elastically compressed. Thus sealing performance is further improved.

### Brief Description of Drawings

Fig. 1 shows a vertically sectioned front view of a rotary vane steering gear, seen along the arrows c-c in Fig. 2, in accordance with the mode for carrying out the present invention;
Fig. 2 shows a horizontally sectioned plane view of the same rotary vane steering gear, seen along the arrows a-a in Fig. 1;
Fig. 3 shows a sectional front view of the same rotary vane steering gear, seen along the arrows b-b in Fig. 1;
Fig. 4 shows a front view vertically sectioned in the radial direction including a segment of a housing, in which a lower ring seal of the same rotary vane steering gear in a worn condition is shown;
Fig. 5 shows a front view vertically sectioned in the radial direction (enlarged), in which the same lower ring seal in an initially worn condition is shown;
Fig. 6 shows a front view vertically sectioned in the radial direction including a segment of a housing, in which a lower ring seal in accordance with the other mode for carrying out the present invention in a worn condition is shown;
Fig. 7 shows an enlarged vertically sectioned front view of the same lower ring seal, in which its shape in a free condition is shown;
Fig. 8 shows a front view vertically sectioned in the radial direction including a segment of a housing, in which a lower ring seal in accordance with the same other mode for carrying out the present invention in a differently worn condition is shown;
Fig. 9 shows a front view vertically sectioned in the radial direction including a segment of a housing, in which a lower ring seal in accordance with further other mode for carrying out the present invention in a worn condition is shown;
Fig. 10 shows a partially sectioned plane view of a lower ring seal of the same further other mode for carrying out the present invention, in which the upper half of the view shows the upper surface of the lower ring seal, and the lower half the back surface;
Fig. 11 shows an enlarged vertically sectioned front view of a lower ring seal in accordance with the same further other mode for carrying out the present invention, in which its shape in a free condition is shown;
Fig. 12 shows an enlarged vertically sectioned front view of a lower ring seal in accordance with further other mode for carrying out the present invention, in which its shape in a free condition is shown;
Fig. 13 shows a partially sectioned plane view of the same lower ring seal, in which the upper half of the view shows a plane seen along the arrows m-m in Fig. 12, and the lower half a sectional plane seen along the arrows n-n in Fig. 12;
Fig. 14 shows a vertically sectioned front view of a rotary vane steering gear, to which a means of leading high pressure working oil to the same ring seal in accordance with the other mode for carrying out the present invention is applied;
Fig. 15 shows an enlarged horizontally sectioned plane view of the same means seen along the arrows d-d in Fig. 14;
Fig. 16 shows a vertically sectioned front view of a rotary vane steering gear, to which a means of leading high pressure working oil to the same ring seal in accordance with the further other mode for carrying out the present invention is applied;
Fig. 17 shows a horizontally sectioned partial plane view of a rotary vane steering gear in accordance with the mode for carrying out the present invention, in which vertical seals of a housing segment in a worn condition are shown;
Fig. 18 shows an enlarged horizontally sectioned plane view and side view of the same vertical seal, in which its shape in a free condition is shown;
Fig. 19 shows a horizontally sectioned plane view and side view of a vertical seal of a housing segment in accordance with the other mode for carrying out the present invention, in which its shape in a free condition is shown;
Fig. 20 shows a vertically sectioned front view of a rotary vane steering gear of a prior art, seen along the arrows e-e in Fig. 22;
Fig. 21 shows a partially sectioned bird's-eye view of the same rotary vane steering gear;
Fig. 22 shows a horizontally sectioned plane view of the same rotary vane steering gear;
Fig. 23 shows a front view vertically sectioned in the radial direction at part of a lower ring seal of the same rotary vane steering gear, in which its constitution is shown;
Fig. 24 shows an enlarged vertically sectioned front view of the same lower ring seal, in which its shape in a free condition is shown;
Fig. 25 shows a horizontally sectioned plane view at part of a vertical seal of the same rotor vane, in which its constitution is shown;
Fig. 26 shows a horizontally sectioned plane view at part of a vertical seal of the same housing segment, in which its constitution is shown; and
Fig. 27 shows an enlarged horizontally sectioned plane view of the vertical seals of the same rotor vane and housing segment, in which their shape in a free condition is shown;

### The Best Mode for Carrying out the Invention

The mode for carrying out the present invention is described and illustrated below with reference to the accompanying drawings. Regarding the members that basically act similar function to the arts above explained in Fig. 20 - Fig. 22, explanation is omitted, with the same numbers being affixed.

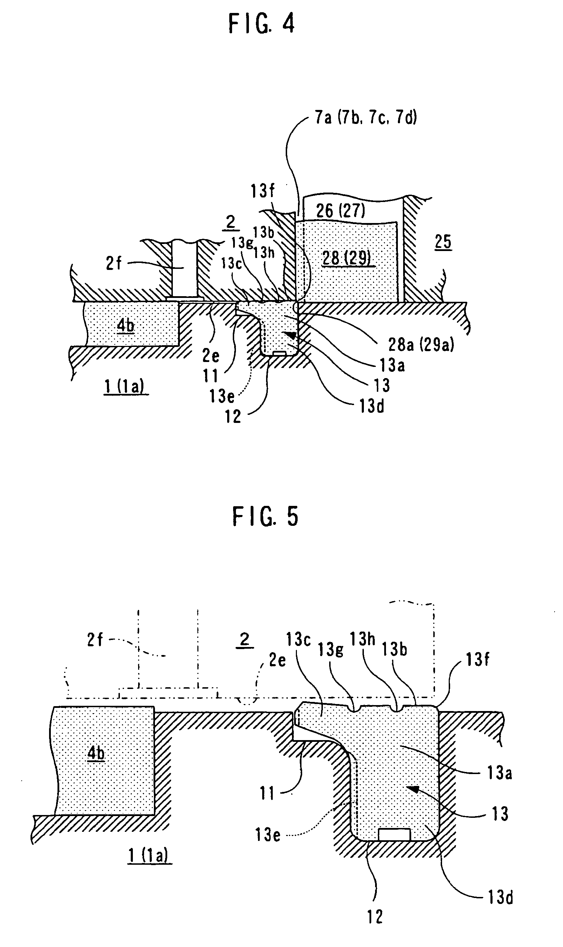

First, explanation is made on a lower ring seal arranged at the lower part of a rotor 2. In Fig. 4 ∼ Fig. 5, a ring slit 11 is formed on the surface of a boss portion 1a of a housing 1, and a ring groove 12 is formed at the outer side of the bottom of the ring slit 11.

A lower ring seal 13 made of elastic material arranged in the ring slit 11 is composed of a cylindrical portion 13a and a ring lip 13c that radially protrudes from the cylindrical portion 13a at the side of a sealing face 13b facing the rotor 2 toward the inner side to the extent it reaches the lateral face of the ring slit, and a base 13d of the cylindrical portion 13a is fitted into the ring groove 12 provided in the ring slit 11. For the sake of this fitting, air vent grooves 13e are provided on the inner periphery of the base 13d in the axial direction at proper intervals, and for manufacturing, dimensional tolerance for diameter of the outer periphery of the cylindrical portion 13a and diameters of the outer periphery of the ring slit 11 and the ring groove 12 is determined so that the outer periphery of the cylindrical portion 13a can be closely fitted into the outer periphery of the ring slit 11 and the ring groove 12.

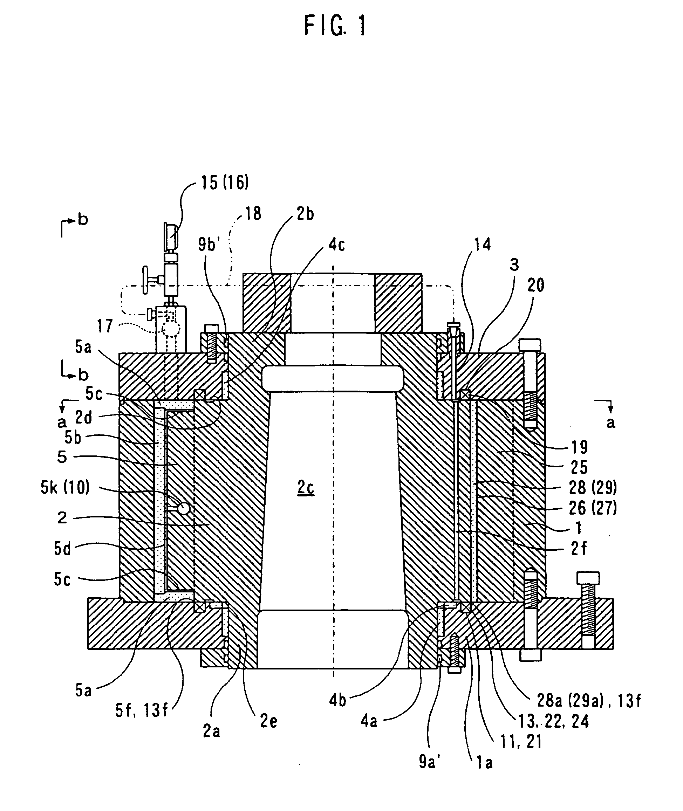

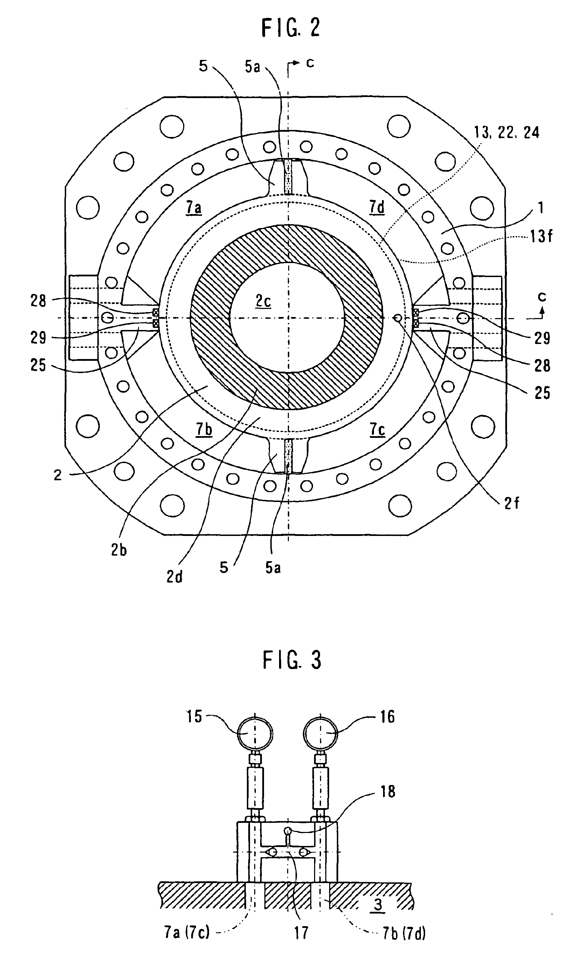

Shape and dimension of a top edge 13f at the outer periphery of the cylindrical portion 13a are determined so that the top edge 13f can be piled on the lower inner edge 5f of the horizontal seal 5a of the vane 5 (refer to Fig. 1) and inner bottom edges 28a, 29a of vertical seals 28, 29 of a segment 25 (refer to Fig. 1 and Fig. 2), respectively, with proper contact pressure in the condition that the rotor 2 is worn.

Height of the cylindrical portion 13a of the lower ring seal 13 is determined so that, in the condition that it is fitted into the ring groove 12 as shown in Fig. 5, the sealing face 13b of the cylindrical portion 13a protrudes to the proper extent a little over the top face of the thrust bearing 4b.

The ring lip 13c of the lower ring seal 13 is so constituted that the top face of its tip portion protrudes upward to some extent over the sealing face 13b of the cylindrical portion 13a in the free condition. A ring oil groove 13g is provided at a boundary between the sealing face 13b and the ring lip 13c, and a ring oil groove 13h is provided on the sealing face 13b. These oil grooves 13g, 13h can be ones of a gentle zigzag in order to further improve lubricating ability. The lower ring seal 13 is shaped so that proper space is formed between the rear of the ring lip 13c and the bottom surface of the ring slit 11 in the condition that it is accommodated in the ring groove 12 of the ring slit 11 and the rotor 2 is worn.

An opening of the balancing hole 2f of the rotor 2 is arranged at the position inside the tip of the ring lip 13c situated at the inner peripheral edge of the ring slit 11, and outside the outer peripheral end face of the thrust bearing 4b in the condition that the lower ring seal 13 is arranged in the ring slit 11 and the rotor 2 is worn.

As shown in Fig. 1, the balancing hole 2f communicates with a gap between the upper end face 2d of the rotor 2 and the lower surface of the top cover 3. A communicative hole 14 is provided in the top cover 3 in the axial direction so that it is communicatively connected with this gap, and, as shown in Fig. 1 and Fig. 3, this communicative hole 14 communicates with an oil pass of respective manometers 15, 16 for the oil chamber 7a i.e. 7c and the oil chamber 7b i.e. 7d by piping 18 through a pressure valve 17. Namely, a path from the oil chamber 7a (7c) to its manometer 15 and a path from the oil chamber 7b (7d) to its manometer 16 are connected to both inlets of the pressure valve 17, and an outlet of the pressure valve 17 is connected to piping 18 led to the communicative hole 14.

In this context, according to this constitution, the lower gland seal 9a' suffers high pressure working oil because high pressure working oil in the oil chambers 7a (7b, 7c, 7d) is led to the inner periphery side of the lower ring seal 13. Accordingly, the lower gland seal 9a' is so constituted that, as shown in Fig. 1, two O-rings are made independent respectively, and grease lubrication is applied to the outer O-ring.

Function in the aforementioned constitution is described in the following: As shown in Fig. 5, the lower ring seal 13 is first accommodated into the ring groove 12 of the ring slit 11 as an initial condition. On this occasion, the fitting is in such a condition that contact between the outer periphery of the cylindrical portion 13a of the lower ring seal and the outer periphery of the ring slit 11 and the ring groove 12 becomes close. Air shut in the ring groove 12 by the fitting function escapes to the outside through a air vent groove 13e.

Next, as in Fig. 4, the rotor 2 is worn, with its lower end face being put on the thrust bearing 4b. The part of the cylindrical portion 13a of the lower ring seal 13 that has protruded to the proper extent a little over the top face level of the thrust bearing 4b touches the lower end face 2e of the rotor, and then is elastically compressed. Accordingly, proper sliding contact pressure is generated between the sealing face 13b, that is the top face of the cylindrical portion, and the lower end face 2e of the rotor.

At the same time, an outer peripheral top edge 13f of the cylindrical portion 13a of the lower ring seal 13 is piled on the lower inner edge 5f of the horizontal seal 5a of the vane 5 (refer to Fig. 1) and the respective inner bottom edges 28a, 29a of the vertical seals 28, 29 of the segment 25 with proper contact pressure, and sealing function between both is performed.

At the same time, the part of the ring lip 13c that has protruded to the extent a little over the top face level of the thrust bearing 4b contacts the lower end face 2e of the rotor and is pushed down by it with elastic deformation, and thus proper sliding contact pressure is generated between the lower end face 2e of the rotor and the ring lip 13c.

Under the aforementioned worn condition, the lower ring seal 13 is repeatedly pushed at the outer peripheral top edge 13f of the cylindrical portion 13a toward the inner periphery side from the outer periphery side according to variation of working oil pressure in the respective oil chambers 7a, 7b, 7c, 7d. But at the same time, as shown in Fig. 1, Fig. 3 and Fig. 4, the working oil pressure in the oil chambers acts on the inner periphery of the cylindrical portion 13a and the rear of the lip 13c of the lower ring seal 13 through the pressure valve 17, the piping 18, the communicative hole 14 of the top cover and the balancing hole 2f of the rotor, and pushes the outer periphery of the cylindrical portion 13a against the outer periphery of the ring slit 11 and the ring groove 12, respectively, over the whole circumference, and simultaneously strengthens force of the ring lip 13c to push the lower end face 2e of the rotor over the whole circumference.

In this context, the high pressure working oil led to the inner periphery of the cylindrical portion 13a and the rear of the ring lip 13c of the lower ring seal 13 is prevented from leaking outside by means of a lower gland seal 9a'. In the lower gland seal 9a', two O-rings are made independent, respectively, and accordingly most of the high pressure working oil is sealed by the inner O-ring, and a little oil leakage from the inner O-ring is completely sealed by the outer O-ring. Shortage of lubrication for the outer O-ring brought by the condition that most of the high pressure working oil is sealed by the inner O-ring is compensated by means of grease lubrication.

Furthermore, it comes that this high pressure working oil also acts on the slidingly moving faces of the thrust bearing 4b and the radial bearings 4a, 4c, and such a secondary effect is given that the higher the working oil pressure becomes, the better the lubrication applied to these bearings becomes.

At the part of the lower ring seal 13 corresponding to the oil chambers of high pressure side 7a and 7c, for instance, high pressure working oil acts on the outer peripheral top edge 13f of the cylindrical portion 13a toward the inner periphery side from the outer periphery side, but it is avoidable that the high pressure working oil leaks into the adjacent oil chambers of low pressure side 7b and 7d, for instance, through the outer peripheral top edge 13f of the cylindrical portion 13a because the outer periphery of the cylindrical portion 13a is pushed with increased force by the working oil pressure against the outer periphery of the ring slit 11 and the ring groove 12 over the whole circumference, and at the same time, it is avoidable that the high pressure working oil leaks into the adjacent oil chambers of low pressure side 7b and 7d, for instance, through the sealing face 13b of the cylindrical portion because the sealing face 13b contacts the lower end face 2e of the rotor.

Furthermore, it is avoidable that the high pressure working oil led to the inner periphery of the cylindrical portion 13a and the rear of the ring lip 13c leaks into the oil chambers 7b and 7d, for instance, through the top face of the ring lip 13c and the sealing face 13b of the cylindrical portion because the ring lip 13c is pushed with increased force by the high pressure working oil against the lower end face 2e of the rotor over the whole circumference.

Furthermore, it is avoidable that the high pressure working oil led to the inner periphery of the cylindrical portion 13a and the rear of the ring lip 13c leaks into the oil chambers of low pressure side through the bottom surface of the ring groove 12 because the bottom surface of the cylindrical portion 13a (the base 13d) firmly sticks to the inner bottom surface of the ring groove 12 of the ring slit by elastic compression of the cylindrical portion over the whole circumference, and at the same time, it is avoidable that the high pressure working oil led to the inner periphery of the cylindrical portion 13a and the rear of the ring lip 13c leaks into the oil chambers of low pressure side through the bottom surface of the ring groove 12 because the outer periphery of the cylindrical portion 13a is pushed against the outer periphery of the ring slit 11 and the ring groove 12.

Furthermore, by virtue of the ring oil groove 13h on the sealing face 13b of the lower ring seal and the ring oil groove 13g provided at the boundary between the sealing face 13b and the ring lip 13c, lubrication for sliding contact of the sealing face 13b and the ring lip 13c with the lower end face 2e of the rotor is secured, and their wearing-out decreases.

Next, an upper ring seal 19 for the upper end face of the rotor 2 is constituted symmetrically in the upper and lower direction with the lower ring seal 13, and what is constitutional and functional is similar to that explained in the mode for carrying out the present invention with respect to the lower ring seal 13. Points that differ are that a ring slit 20 is provided on the lower surface of the top cover 3; protruded parts of the upper ring seal 19 on the occasion that the upper ring seal 19 is initially accommodated in a ring slit 20 are elastically compressed between the top cover 3 and the upper end face 2d of the rotor when the top cover 3 is fitted on the rotor 3; and high pressure working oil is led to the inner periphery of the cylindrical portion and the rear of the ring lip of the upper ring seal 19 through the communicative hole 14 of the top cover 3. Others are quite similar, and accordingly, explanation on them is omitted.

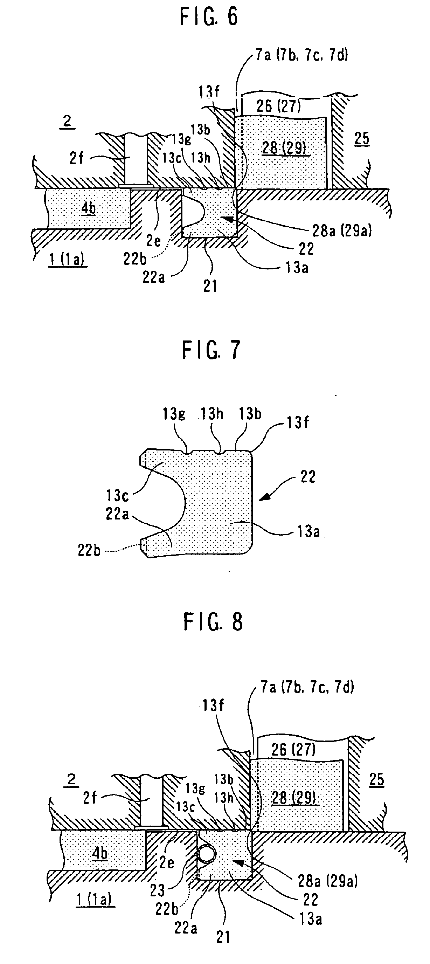

Fig. 6 ∼ Fig. 8 show a ring seal in accordance with other mode for carrying out the present invention. Regarding the members that basically act similar function to the arts above explained in Fig. 4 ∼ Fig. 5, explanation is omitted, with the same numbers being affixed.

Fig. 6 ∼ Fig. 7 show a lower ring seal out of upper and lower ring seals. A ring slit 21 having a square vertical section is formed on the surface of the boss portion 1a of the housing 1, and a lower ring seal 22 made of elastic material is arranged in the ring slit 21. The lower ring seal 22 is composed of a cylindrical portion 13a fitted into the outer periphery side of the ring slit 21, a ring lip 13c that radially protrudes from the cylindrical portion 13a at the side of the end facing the rotor 2 toward the inner side to the extent it reaches the lateral face of the ring slit, and a bottom ring lip 22a that radially protrudes from the cylindrical portion 13a at the side of the end facing the inner bottom surface of the ring slit 21 toward the inner side to the extent it reaches the lateral face of the ring slit 21.

As shown in Fig. 7, the ring lip 13c facing the rotor 2 is so constituted that the top face of its tip portion protrudes upward to some extent over the sealing face 13b of the cylindrical portion 13a in the free condition, and performs completely same function as that in the previous mode for carrying out the present invention. The bottom ring lip 22a facing the ring slit 21 is so constituted that the bottom surface its tip portion protrudes downward to some extent over the bottom surface of the cylindrical portion 13a in the free condition.

In this context, the air vent grooves 13e axially provided on the inner periphery of the base 13d of the cylindrical portion 13a in the previous mode for carrying out the present invention are replaced, in this mode for carrying out the present invention, by air vent grooves 22b provided at the tip portion of the bottom ring lip 22a at proper intervals.

In the operating condition that the rotor 2 is worn, with its lower end face being put on the thrust bearing 4b, the lower ring seal 22 accommodated into the ring slit 21 acts so that, in addition to the sealing function of the respective parts by the function of working oil pressure in the previous mode for carrying out the present invention, it is more effectively avoidable that the high pressure working oil led to the inner periphery side of the cylindrical portion 13a leaks into the oil chambers of low pressure side through the bottom surface of the ring slit 21 because also the bottom ring lip 22a is pushed by the working oil pressure against the bottom surface of the ring slit 21 over the whole circumference, and at the same time, the outer periphery of the cylindrical portion 13a is pushed by the working oil pressure against the outer periphery of the ring slit 21.

Furthermore, as shown in Fig. 8, it is possible to make a coil spring 23 intervene in the circumferential space between the ring lip 13c and the bottom ring lip 22a of the ring seal 22 in a manner that the coil spring elastically contacts the inner peripheral lateral face of the cylindrical portion 13a and the inner peripheral lateral face of the ring slit 21. In this case, in particular, even when the working oil pressure acting on the inner peripheral lateral face of the cylindrical portion 13a is low or null, contact pressure between the outer peripheral lateral face of the ring seal 22 and the outer peripheral lateral face of the ring slit 21 is further strengthened, and leakage of oil through this face is more effectively avoidable.

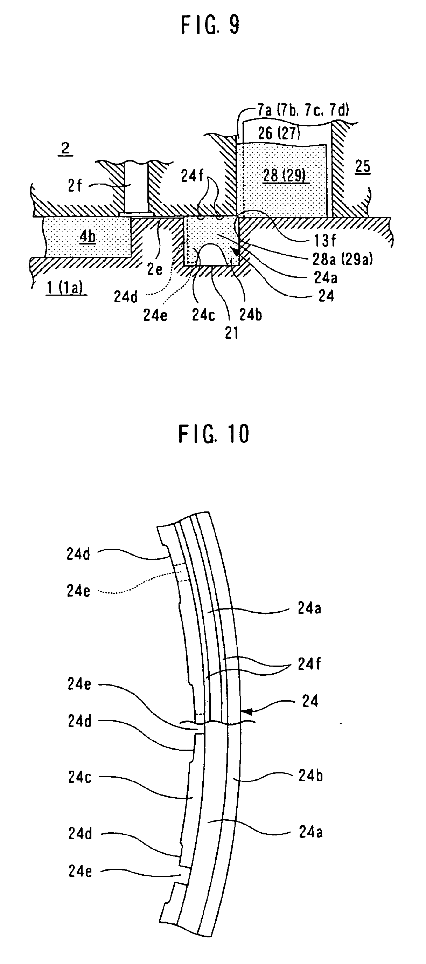

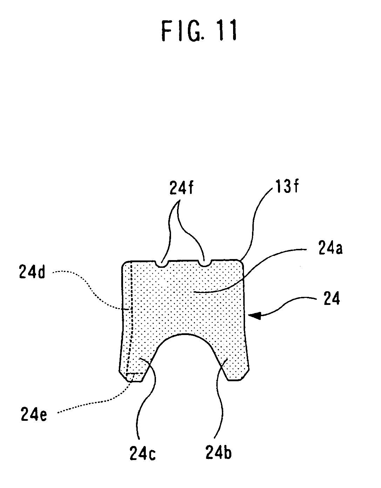

Fig. 9 ∼ Fig. 11 show a ring seal in accordance with further other mode for carrying out the present invention. Regarding the members that basically act similar function to the arts above explained in Fig. 6 ∼ Fig. 7, explanation is omitted, with the same numbers being affixed.

Fig. 9 ∼ Fig. 11 show a lower ring seal out of upper and lower ring seals. A ring slit 21 having a square vertical section is formed on the surface of the boss portion 1a of the housing 1, and a lower ring seal 24 made of elastic material is arranged in the ring slit 21. The lower ring seal 24 is composed of a ring portion 24a set inside the ring slit 21 at its surface side, an outer ring skirt 24b that axially protrudes whole circumferentially from the ring portion 24a at its end facing the outer periphery of the ring slit 21 toward the bottom surface of the ring slit to the extent it reaches the bottom surface of the ring slit, and an inner ring skirt 24c that axially protrudes whole circumferentially from the ring portion 24a at its end facing the inner periphery of the ring slit 21 toward the bottom surface of the ring slit to the extent it reaches the bottom surface of the ring slit. The lower ring seal 24 is provided with indents 24d in fixed width in appropriate numbers over the whole circumference on the inner periphery so as to extend from the top edge of the ring portion 24a to the bottom edge of the inner ring skirt 24c, and communicative grooves 24e that make the indents 24d communicatively connect to the space between the outer ring skirt 24b and inner ring skirt 24c are provided. An oil groove 24f of ring shape or zigzag shape is provided on the top face of the ring portion 24a that is the sealing face between the lower end face 2e of the rotor 2 and the lower ring seal.

As shown in Fig. 11, the outer ring skirt 24b facing the outer periphery of the ring slit 21 is so constituted that its tip portion radially protrudes to some extent toward the outside over the outer periphery of the ring portion 24a in the free condition, and the inner ring skirt 24c facing the inner periphery of the ring slit 21 is so constituted that its tip portion radially protrudes to some extent toward the inside over the inner periphery of the ring portion 24a in the free condition.

Dimensional tolerance for the ring portion 24a for manufacturing is determined so that contact of its outer periphery with the outer periphery of the ring slit 21 becomes close. Shape and dimension of an outer peripheral top edge 13f of the ring portion 13a are determined so that the top edge 13f can be piled on the respective inner peripheral bottom edges 5f, 28a, 29a of the horizontal seal 5a of the vane 5 (refer to Fig. 1) and vertical seals 28, 29 of a segment 25 (refer to Fig. 1 and Fig. 2) with proper contact pressure in the condition that the rotor 2 is worn.

Height of the lower ring seal 24 is determined so that, in the condition that it is set inside the ring slit 21, the top face of the ring portion 24a protrudes to the proper extent a little over the top face of the thrust bearing 4b.

An opening of the balancing hole 2f of the rotor 2 is arranged at the position inside the inner peripheral end of the ring slit 21, and outside the outer peripheral end of the thrust bearing 4b in the condition that the lower ring seal 24 is arranged in the ring slit 21 and the rotor 2 is worn.

After the lower ring seal 24 is accommodated into the ring slit 21 as an initial condition by means of making the ring skirts 24b, 24c elastically deform in the radial direction, the rotor 2 is worn, with its lower end face being put on the thrust bearing 4b. Then the top face of the lower ring seal 24 that has protruded a little over the top face level of the thrust bearing 4b touches the lower end face 2e of the rotor, and mainly the ring skirts 24b, 24c are elastically compressed.

Under the aforementioned worn condition, the lower ring seal 24 contacts the lower end face 2e of the rotor at the top face of the ring portion 24a, and the outer peripheral face of the ring slit 21 at the outer peripheral faces of the ring portion 24a and the ring skirt 24b, respectively, with proper contact pressure, and it is avoidable that the working oil in the oil chambers leaks into the adjacent oil chambers through these parts.

When high working pressure is generated in the oil chambers, this working oil pressure pushes the outer peripheral top edge of the ring portion 24a of the lower ring seal 24 toward the inner periphery side from the outer periphery side. But at the same time, this working oil pressure communicates with the inner peripheral top edge of the ring slit 21 through the balancing hole 2f of the rotor 2 in the same manner as explained in the above respective modes for carrying out the present invention, and accordingly, the high pressure working oil acts on the indents 24d of the lower ring seal 24, and pushes the outer periphery of the ring portion 24a at the portions of indents 24d against the outer periphery of the ring slit 21 over the whole circumference. The working oil pressure is also communicatively connected to the space between both ring skirts 24b, 24c, and accordingly, it strengthens force to push the outer ring skirt 24b against the outer periphery of the ring slit 21 over the whole circumference, and also strengthens force to push the top sealing face of the ring portion 24a against the lower end face 2e of the rotor.

By virtue of this, it is avoidable that the high pressure working oil in the oil chambers of high pressure side leaks into the adjacent oil chambers of low pressure side through the top sealing face of the ring portion 24a, and through the outer periphery of the ring portion 24a of the lower ring seal 24. Furthermore, it is avoidable that the high pressure working oil led to the space between both ring skirts 24b, 24c leaks into the oil chambers of low pressure side through a gap between the outer ring skirt 24b and the outer periphery of the ring slit 21.

In this context, the inner ring skirt 24c is pushed against the inner periphery of the ring slit 21 by the force of high pressure working oil acting on the outer periphery of the inner ring skirt minus the force of high pressure working oil acting on the indents 24d on the inner periphery of the inner ring skirt. However, the inner ring skirt does not take part in sealing function, but contributes to uniform compression of the lower ring seal 24 when it is elastically pressed by the lower end face 2e of the rotor after the lower ring seal 24 is initially accommodated in the ring slit 21.

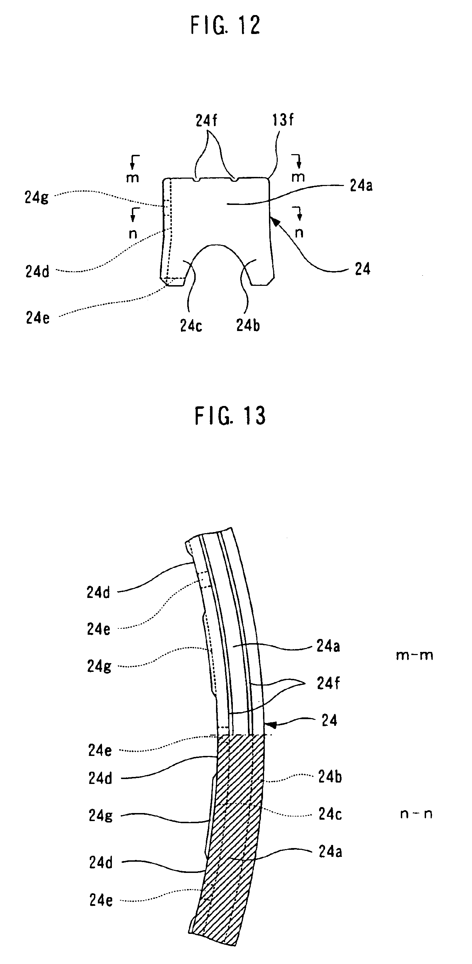

Fig. 12 ∼ Fig. 13 show a ring seal in accordance with further other mode for carrying out the present invention. Regarding the members that basically act similar function to the arts above explained in Fig. 9 ∼ Fig. 11, explanation is omitted, with the same numbers being affixed.

The ring seal 24 is provided with the indents 24d in fixed width in appropriate numbers over the whole circumference on the inner periphery of the ring seal 24 so that the indents extend from the top edge of the ring portion 24a to the bottom edge of the inner ring skirt 24c, and also provided with a ring groove 24g in fixed width, to which the respective indents 24d are communicatively connected at part of the ring portion 24a.

When high working oil pressure is generated in the oil chambers, this working oil pressure acts on the indents 24d, and pushes the outer periphery of the ring portion 24a against the outer periphery of the ring slit 21 over the whole circumference at part of the indents 24d. In addition, this working oil pressure acts on the ring groove 24g that communicatively connects the respective indents 24d, and pushes the outer periphery of the ring portion 24a against the outer periphery of the ring slit 21 not only at parts of the indents 24d but also over the whole circumference. By virtue of this, the force to push the ring portion 24a against the outer periphery of the ring slit 21 becomes larger than that caused by the working oil pressure acting on the indents 24d only. Accordingly, it is more effectively avoidable that the high pressure working oil in the oil chambers of high pressure side leaks into the adjacent oil chambers of low pressure side through the outer periphery of the ring portion 24a.

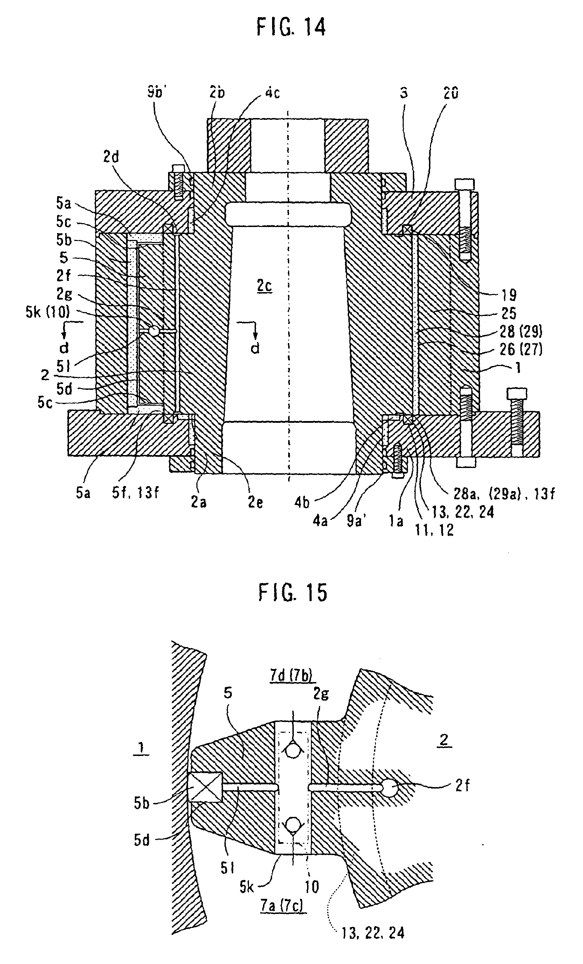

Fig. 14 ∼ Fig. 15 show another mode for carrying out the present invention with respect to other means to lead high pressure working oil in the oil chambers 7a (7b, 7c, 7d) to the inner peripheral space of the ring seals 13, 19, 22, 24 in accordance with the present invention. Regarding the members that basically act similar function to the arts above explained in the respective modes for carrying out the present invention, explanation is omitted, with the same numbers being affixed.

As shown in Fig. 14 ∼ Fig. 15, the balancing hole 2f of the rotor 2 is so arranged as to be within the vertical central plane of the vane 5, the upper opening of the balancing hole 2f is led to the gap communicatively connected to the inner peripheral space of the upper ring seal 19 between the upper end face 2d of the rotor 2 and the lower surface of the top cover 3, and the lower opening of the balancing hole 2f is led to the gap communicatively connected to the inner peripheral space of the lower ring seals 13, 22, 24 between the lower end face 2e of the rotor 2 and the boss portion 1a of the housing 1.

A balancing hole connecting hole 2g that communicatively connects the oil chamber communicative hole 5k of the vane with the balancing hole 2f is provided at the oil chamber communicative hole 5k so as to be concentric with the communicative hole 5l that communicatively connects the oil chamber communicative hole 5k with the bottom surface of the vertical slit 5d that accommodates the vertical seal 5b of the vane 5.

In the aforementioned constitution, when the oil chamber 7a (7c), for instance, becomes an oil chamber of pressure side out of two oil chambers, the oil chamber 7a (7c) and the oil chamber 7d (7b), that are isolated by the rotor vane 5, the pressure oil communicates to the oil chamber communicative hole 5k through a valve of the oil chamber 7a (7c) side of the pressure valve 10 provided in the oil chamber communicative hole 5k, and communicatively connects to the balancing hole 2f through the balancing hole connecting hole 2g. This pressure oil acts on the inner peripheral face of the upper ring seal 19 through the upper opening of the balancing hole 2f, and acts on the inner peripheral face of the lower ring seals 13, 22, 24 through the lower opening of the balancing hole 2f, respectively.

In this constitution, the means to lead the working oil in the oil chambers of pressure side to the balancing hole 2f can be given, only with the drilling work, when manufacturing, in which the communicative hole 51 is drilled from the bottom surface of the vertical slit 5d of the vane 5 up to the oil chamber communicative hole 5k of the vane, being extended up to the balancing hole 2f of the rotor 2, and does not necessitate attachment such as piping, etc. Accordingly, such an effect is exhibited that manufacturing becomes extremely easy, and cost is reduced.

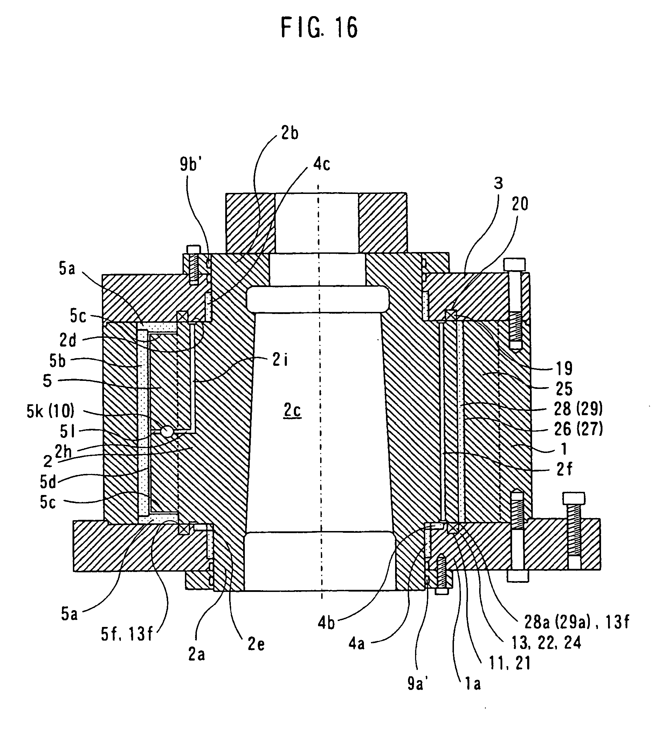

Fig. 16 shows further other mode for carrying out the present invention with respect to further other means to lead high pressure working oil in the oil chambers 7a (7b, 7c, 7d) to the inner peripheral space of the ring seals 13, 19, 22, 24 in accordance with the present invention. Regarding the members that basically act similar function to the arts above explained in the respective modes for carrying out the present invention, explanation is omitted, with the same numbers being affixed.

As shown in Fig. 16, an extension hole 2h is provided at the oil chamber communicative hole 5k of the vane 5 so as to be concentric with the communicative hole 51 that communicatively connects the oil chamber communicative hole 5k with the bottom surface of the vertical slit 5d that accommodates the vertical seal 5b of the vane 5, and a vertical extension hole 2i is provided so as to communicatively connect the terminus of the extension hole 2h with the gap between the upper end face 2d of the rotor 2 and the lower surface of the top cover 3 that communicatively connects to the inner peripheral space of the upper ring seal 19.

In the aforementioned constitution, when the oil chamber 7a (7c), for instance, becomes an oil chamber of pressure side out of two oil chambers, the oil chamber 7a (7c) and the oil chamber 7d (7b), that are isolated by the rotor vane 5, the pressure oil communicates to the oil chamber communicative hole 5k through a valve of the oil chamber 7a (7c) side of the pressure valve 10 provided in the oil chamber communicative hole 5k, and acts on the inner peripheral face of the upper ring seal 19 through the extension hole 2h and the vertical extension hole 2i, and simultaneously this pressure oil also acts on the inner peripheral face of the lower ring seals 13, 22, 24 through the balancing hole 2f.

In this constitution, such an effect is exhibited in the similar manner that working oil in the oil chambers of high pressure side can be led to the inner peripheral space of the upper and lower ring seals 13, 19, 22, 24 without necessitating attachment such as piping, etc.

In this context, it is also possible for the vertical extension hole 2i to be so constituted that it opens to the gap that communicatively connects to the inner peripheral space of the lower ring seals 13, 22, 24, instead of to the gap that communicatively connects to the inner peripheral space of the upper ring seal 19.

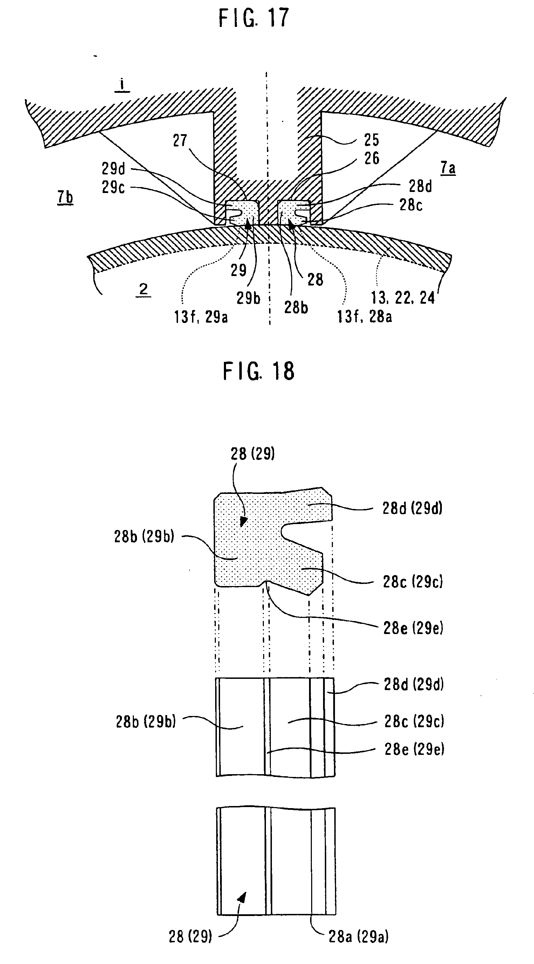

In the next place, explanation is made on vertical seals arranged on the segment of the housing 1. In Fig. 17 ∼ Fig. 18, a pair of vertical slits 26 and 27 is formed in the vertical direction on the tip face of the segment 25 so as to face the outer periphery of the rotor 2. Vertical seals 28, 29 made of elastic material are arranged symmetrically in the vertical slits 26, 27.

The respective vertical seal 28, 29 is composed of a base 28b, 29b arranged in the vertical slit 26, 27 on the side of the center of the segment 25, a first lip 28c, 29c that tangentially protrudes from the base 28b, 29b toward the outside of the segment to the extent it reaches the lateral face of the vertical slit 26, 27, leaving a little gap, so that it faces the outer periphery of the rotor 2, and a second lip 28d, 29d that tangentially protrudes from the base 28b, 29b toward the outside of the segment to the extent it reaches the lateral face of the vertical slit 26, 27 so that it faces the bottom surface of the vertical slit 26, 27. An oil groove 28e, 29e is provided at the boundary between the first lip 28c, 29c and the base 28b, 29b that faces the outer periphery of the rotor 2.

The first lip 28c, 29c is so constituted that the tip portion of its end face facing the outer periphery of the rotor 2 radially protrudes over the end face of the base 28b, 29b to some extent toward the outer periphery of the rotor in the free condition, and the second lip 28d, 29d is so constituted that the tip portion of its end face facing the bottom surface of the vertical slit 26, 27 radially protrudes over the end face of the base 28b, 29b to some extent toward the bottom surface of the vertical slit in the free condition.

In the condition that the rotor 2 is worn and the vertical seals 28, 29 are arranged in the vertical slits 26, 27, the tip portions of the first lips 28c, 29c contact the outer periphery of the rotor 2, and the tip portions of the second lips 28d, 29d contact the bottom surface of the vertical slits 26, 27, respectively, at proper contact pressure. Furthermore, the faces of the bases 28b, 29b, that face the outer periphery of the rotor 2, slightly contact the outer periphery of the rotor 2, with the bases 28b, 29b being scarcely compressed by the rotor 2. Proper space is formed between the first lip 28c, 29c and the second lip 28d, 29d.

Function in the aforementioned constitution is described in the following: As shown in Fig. 17, the vertical seals 28, 29 are inserted into the vertical slits 26, 27 of the segment 25 in the condition that the housing 1 wears the rotor 2.

In this condition, the first lips 28c, 29c and the second lips 28d, 29d of the vertical seals 28, 29 are elastically deformed, and the tip portions of the first lips 28c, 29c contact the outer periphery of the rotor 2, and the tip portions of the second lips 28d, 29d contact the bottom surface of the vertical slits 26, 27, respectively, at proper contact pressure.

When the oil chamber 7a, for instance, becomes an oil chamber of high pressure, the high pressure working oil in the oil chamber 7a enters the gap between the first lip 28c and the second lip 28d of the vertical seal 28 of one side, and brings such a condition that the first lip 28c is pushed against the outer periphery of the rotor 2, and the second lip 28d is pushed against the bottom surface of the vertical slit 26 by the oil pressure. Thus it is avoidable that the high pressure working oil in the oil chamber 7a leaks into the adjacent oil chamber 7b of low pressure through the vertical seals 28, 29 and the bottom surface of the vertical slit 26.

In contrast with this, when the oil chamber 7b becomes an oil chamber of high pressure, the high pressure working oil in the oil chamber 7b enters the gap between the first lip 29c and the second lip 29d of the vertical seal 29 of another side, and acts similarly. Accordingly, it is avoidable that the high pressure working oil in the oil chamber 7b leaks into the adjacent oil chamber 7a of low pressure.

In a prior art of seals, contact pressure of a sealing face is not in simple proportion to magnitude of oil pressure in an oil chamber that acts on the rear of a seal, because it also acts on skirt portions and pushes the skirt portions against the lateral faces of a slit, and accordingly, extremely complicated analysis and design have been required. In contrast with this, according to the mode for carrying out the present invention, force to push the first lips 28c, 29c and the second lips 28d, 29d against the respective opposite faces is in simple proportion to magnitude of working oil pressure, and accordingly, design becomes extremely easy and also reliability becomes high. The higher working oil pressure in an oil chamber becomes, the stronger sealing action becomes, and accordingly, it is possible to restrain leakage that comes to be large in quantity in proportion to oil pressure.

Furthermore, even in case of low load condition that working oil pressure is scarcely generated, or in case of null oil pressure, oil tightness between oil chambers isolated by the segment 25 is secured by virtue of initial contact pressure brought by elasticity of the first lips 28c, 29c and the second lips 28d, 29d.

In addition, by virtue of the oil grooves 28e, 29e provided at the slidingly moving parts of the vertical seals 28, 29 that oppose the outer periphery of the rotor 2, lubrication for the slidingly moving faces is secured, and their wearing out is reduced.

Furthermore, different from a prior art, it comes unnecessary to machine holes etc. for providing the pressure valve 10 transversely provided in the segment 6, and accordingly, rationalization of design is realizable by virtue of the matter that the segment 25 can be of one-piece construction with the housing 1, with such segment fitting bolts as required in a prior art being not necessitated.

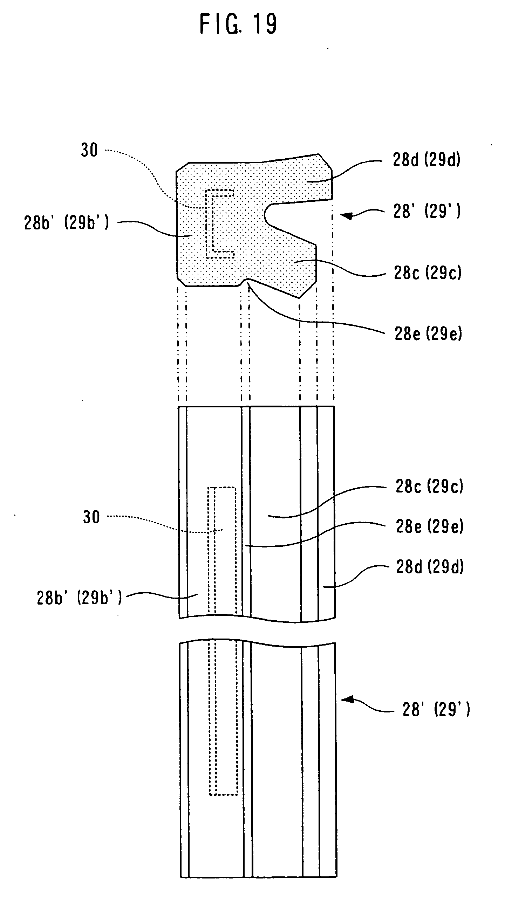

Fig. 19 shows a vertical seal of a housing segment in accordance with another mode for carrying out the present invention. Respective vertical seal 28', 29' is so constituted that a rigid core member 30 is buried into a base 28b', 29b' in the axial direction, with the upper and lower end portions of the vertical seal being left as they are, and that the vertical seal 28', 29' is formed a little longer than the vertical slit 26, 27 in the free condition.

By virtue of this constitution, when the vertical seals 28', 29' are inserted into the vertical slits 26, 27 of the segment 25 in the axial direction for initial wearing in the condition that the rotor 2 has been worn by the housing 1, the vertical seals can be easily and precisely worn in the prescribed position because the vertical seals have rigidity in the axial, circumferential and radial directions at part of the bases 28b', 29b' containing the core member 30

On the occasion that the top cover 3 is fitted to the housing 1, only the top and bottom portions of the vertical seals 28', 29' are elastically compressed in such a manner that a little protruded surplus of the vertical seals in the axial direction at the initial wearing is pressed, and the top and bottom end faces of the vertical seals firmly stick to the back surface of the top cover 3 and the inner bottom surface of the housing 1, respectively.

Furthermore, by virtue of the matter that the portion of the base 28b', 29b' containing the core member 30, and the portions of the first lip 28c, 29c and the second lip 28d, 29d corresponding to the portion of the base containing the core member do not bend in the circumferential and radial directions, linearity of sliding contact between the first lip 28c, 29c and the outer periphery of the rotor 2, and contact between the second lip 28d, 29d and the bottom surface of the vertical slit 26, 27 can be secured, and at the same time, uniformity and non-inclination of contact of the top and bottom end faces of the vertical seal 28', 29' against the rear of the top cover 3 and the inner bottom surface of the housing 1, respectively, can be secured. Thus sealing performance is further improved.

In accordance with the present invention as aforementioned, such excellent effects are exhibited that the upper and lower ring seals and the vertical seals of the housing segment, respectively made of elastic material, can be easily designed so as to satisfy all the necessary conditions for sealing function, dispensing with such difficult design required in a prior art that the contradictious conditions each other have to be simultaneously satisfied; even with seals being manufactured with inequality in dimensional accuracy, because of extreme difficulty in producing a product of elastic material with required dimensional tolerance, sealing performance is less influenced; and accordingly, the seals are not only excellent in performance, but also avoidable of damage, and can exhibit extremely high reliability.

In addition, such an effect is exhibited that the oil passes led from the segment slit to the rear of the ring seals, that are required in a prior art, machining of which is complicated, come unnecessary, and reduction in machining cost comes possible.

Furthermore, such an effect is exhibited that it comes possible to make the segments one-piece construction with the housing and dispense with the segment fitting bolts by virtue of the matter that machining traversing the segment comes unnecessary, and thus rationalization of design is realizable.

## Claims

1. Seal construction of a rotary vane steering gear **characterized in that**:
in a rotary vane steering gear that is composed of a rotor, into which a rudderstock is fitted, a housing that accommodates the rotor and forms space for oil chambers in the circumferences of the rotor, and a ring-shaped top cover arranged at an upper opening of the housing, and is so constituted that plural vanes are arranged at equal intervals along circumferential direction on the outer periphery of the rotor, plural segments are arranged at equal intervals along circumferential direction on the inner periphery of the housing, the aforementioned space for oil chambers is divided into plural oil chambers by the vanes and the segments, a balancing hole that opens to the upper and lower end faces of the rotor is provided, a ring-shaped slit is formed on the inner bottom surface of the housing and the lower surface of the top cover, respectively, so as to face the end faces of the rotor, and a ring seal made of elastic material is arranged in the ring-shaped slits, respectively, so that their sealing face contacts the end face of the rotor with proper contact pressure,
a ring groove is formed at the outer side of the bottom of a ring slit; a ring seal is composed of a cylindrical portion fitted into the ring groove, and a ring lip that radially protrudes from the cylindrical portion toward the inner side to the extent it reaches the lateral face of the ring slit, and in a manner that its tip portion vertically protrudes over the end face of the cylindrical portion toward the end face of the rotor in the free condition; the balancing hole is communicatively connected to the oil chambers of pressure side; and the openings of the balancing hole are arranged so as to be inside the inner peripheral edges of the ring slits.

2. Seal construction of a rotary vane steering gear **characterized in that**:
in a rotary vane steering gear that is composed of a rotor, into which a rudderstock is fitted, a housing that accommodates the rotor and forms space for oil chambers in the circumferences of the rotor, and a ring-shaped top cover arranged at an upper opening of the housing, and is so constituted that plural vanes are arranged at equal intervals along circumferential direction on the outer periphery of the rotor, plural segments are arranged at equal intervals along circumferential direction on the inner periphery of the housing, the aforementioned space for oil chambers is divided into plural oil chambers by the vanes and the segments, a balancing hole that opens to the upper and lower end faces of the rotor is provided, a ring-shaped slit is formed on the inner bottom surface of the housing and the lower surface of the top cover, respectively, so as to face the end faces of the rotor, and a ring seal made of elastic materials is arranged in the ring-shaped slits, respectively, so that their sealing face contacts the end face of the rotor with proper contact pressure,
the ring seal is composed of a cylindrical portion fitted into the outer peripheral side of a ring slit, a ring lip that radially protrudes from the cylindrical portion toward the inner side to the extent it reaches the lateral face of the ring slit, and in a manner that its tip portion vertically protrudes over the end face of the cylindrical portion toward the side of the end face of the rotor in the free condition, and a bottom ring lip that radially protrudes from the cylindrical portion toward the inner side to the extent it reaches the lateral face of the ring slit, and in a manner that its tip portion vertically protrudes over another end face of the cylindrical portion toward the side of the bottom surface of the ring slit in the free condition; fixed space is formed between the ring lip and the bottom ring lip; the balancing hole is communicatively connected to the oil chambers of pressure side; and the openings of the balancing hole are arranged so as to be inside the inner peripheral edges of the ring slits.

3. Seal construction of a rotary vane steering gear **characterized in that**:
in a rotary vane steering gear that is composed of a rotor, into which a rudderstock is fitted, a housing that accommodates the rotor and forms space for oil chambers in the circumferences of the rotor, and a ring-shaped top cover arranged at an upper opening of the housing, and is so constituted that plural vanes are arranged at equal intervals along circumferential direction on the outer periphery of the rotor, plural segments are arranged at equal intervals along circumferential direction on the inner periphery of the housing, the aforementioned space for oil chambers is divided into plural oil chambers by the vanes and the segments, a balancing hole that opens to the upper and lower end faces of the rotor is provided, a ring-shaped slit is formed on the inner bottom surface of the housing and the lower surface of the top cover, respectively, so as to face the end faces of the rotor, and a ring seal made of elastic materials is arranged in the ring-shaped slits, respectively, so that their sealing face contacts the end face of the rotor with proper contact pressure,
the ring seal is composed of a ring portion set inside a ring slit at its surface side, an outer ring skirt that axially protrudes whole circumferentially from the ring portion at its end facing the outer periphery of the ring slit toward the bottom surface of the ring slit to the extent it reaches the bottom surface of the ring slit, and in a manner that its tip portion radially protrudes over the outer periphery of the ring portion toward the outer lateral face of the ring slit in the free condition, and an inner ring skirt that axially protrudes whole circumferentially from the ring portion at its end facing the inner periphery of the ring slit toward the bottom surface of the ring slit to the extent it reaches the bottom surface of the ring slit, and in a manner that its tip portion radially protrudes over the inner periphery of the ring portion toward the inner lateral face of the ring slit in the free condition; the ring seal is provided with indents in fixed width in appropriate numbers over the whole circumference on the inner periphery so as to extend from the top edge of the ring portion to the bottom edge of the inner ring skirt; the indents are communicatively connected to the space between the outer ring skirt and the inner ring skirt; the balancing hole is communicatively connected to the oil chambers of pressure side; and the openings of the balancing hole are arranged so as to be inside the inner peripheral edges of the ring slits.

4. Seal construction of a rotary vane steering gear in accordance with Patent Claim 3, **characterized in that** the ring seal is provided with indents in fixed width in appropriate numbers over the whole circumference on the inner periphery of the ring seal so that the indents extend from the top edge of the ring portion to the bottom edge of the inner ring skirt, and also provided with a ring groove in fixed width, to which the respective indents are communicatively connected at part of the ring portion.

5. Seal construction of a rotary vane steering gear in accordance with one or other of Patent Claims 1 - 4, **characterized in that** the balancing hole of the rotor that opens to the upper and lower end faces of the rotor at the inner part of the inner peripheral edge of the ring slit for the ring seal is so arranged as to be within the vertical central plane of the vane, and a balancing hole connecting hole that communicatively connects the oil chamber communicative hole with the balancing hole is provided at the oil chamber communicative hole of the vane so as to be concentric with the communicative hole for the vertical slit of the vane.

6. Seal construction of a rotary vane steering gear **characterized in that**:
in a rotary vane steering gear that is composed of a rotor, into which a rudderstock is fitted, a housing that accommodates the rotor and forms space for oil chambers in the circumferences of the rotor, and a ring-shaped top cover arranged at an upper opening of the housing, and is so constituted that plural vanes are arranged at equal intervals along circumferential direction on the outer periphery of the rotor, plural segments are arranged at equal intervals along circumferential direction on the inner periphery of the housing, the aforementioned space for oil chambers is divided into plural oil chambers by the vanes and the segments,
a pair of vertical slits is formed in the vertical direction on the tip face of the segments so as to face the outer periphery of the rotor; vertical seals made of elastic material are arranged symmetrically in the vertical slits, respectively, so that a sealing face of the respective vertical seal contacts the outer periphery of the rotor with proper contact pressure; the respective vertical seal is composed of a base arranged in the vertical slit on the side of the segment center, a first lip that tangentially protrudes from the base toward the outside of the segment to the extent it reaches the lateral face of the vertical slit, leaving a little gap, and in a manner that its tip portion radially protrudes over the end face of the base toward the outer periphery of the rotor in the free condition, and a second lip that tangentially protrudes from the base toward the outside of the segment to the extent it reaches the lateral face of the vertical slit, and in a manner that its tip portion radially protrudes over another end face of the base toward the bottom surface of the vertical slit in the free condition; and fixed space is formed between the first lip and the second lip.

7. Seal construction of a rotary vane steering gear in accordance with Patent Claim 6, **characterized in that** a rigid core member is buried into the base of the vertical seal in the axial direction, with the upper and lower end portions of the vertical seal being left as they are, and that the vertical seal is formed a little longer than the vertical slit in the free condition.

## Patentansprüche

1. Dichtungskonstruktion einer Drehflügel-Ruderanlage, **dadurch gekennzeichnet, dass**:
bei einer Drehflügel-Ruderanlage, die aus einem Rotor, in den ein Ruderschaft eingesetzt ist, einem Gehäuse, das den Rotor aufnimmt und Raum für Ölkammern am Umfang des Rotors bildet, und einer ringförmigen oberen Abdeckung besteht, die an einer oberen Öffnung des Gehäuses angeordnet ist, und die so aufgebaut ist, dass mehrere Flügel in gleichmäßigen Abständen in Umfangsrichtung am Außenrand des Rotors angeordnet sind, mehrere Segmente in gleichmäßigen Abständen in Umfangsrichtung am Innenrand des Gehäuses angeordnet sind, der Raum für Ölkammern durch die Flügel und die Segmente in mehrere Ölkammern unterteilt ist, ein Ausgleichsloch, das sich zu der oberen und der unteren Endfläche des Rotors hin öffnet, vorhanden ist, ein ringförmiger Schlitz an der inneren Bodenfläche des Gehäuses bzw. der unteren Fläche der oberen Abdeckung so ausgebildet ist, dass er den Endflächen des Rotors zugewandt ist, und eine Ringdichtung, die aus elastischem Material besteht, in den ringförmigen Schlitzen jeweils so angeordnet ist, dass ihre Dichtungsfläche der Endfläche des Rotors mit ordnungsgemäßem Kontaktdruck zugewandt ist,
eine Ringnut an der Außenseite des Bodens eines Ringschlitzes ausgebildet ist, eine Ringdichtung aus einem zylindrischen Abschnitt, der in die Ringnut eingepasst ist, und einer Ringlippe besteht, die von dem zylindrischen Abschnitt zu der Innenseite hin radial so weit vorsteht, dass sie bis an die seitliche Fläche des Ringschlitzes reicht, und so, dass ihr vorderer Abschnitt im freien Zustand vertikal über die Endfläche des zylindrischen Abschnitts zu der Endfläche des Rotors hin vorsteht, das Ausgleichsloch kommunizierend mit den Ölkammern der Druckseite verbunden ist und die Öffnungen des Ausgleichslochs so angeordnet sind, dass sie innerhalb der Innenrandkanten der Ringschlitze liegen.

2. Dichtungskonstruktion einer Drehflügel-Ruderanlage, **dadurch gekennzeichnet, dass**:
bei einer Drehflügel-Ruderanlage, die aus einem Rotor, in den ein Ruderschaft eingesetzt ist, einem Gehäuse, das den Rotor aufnimmt und Raum für Ölkammern am Umfang des Rotors bildet, und einer ringförmigen oberen Abdeckung besteht, die an einer oberen Öffnung des Gehäuses angeordnet ist, und die so aufgebaut ist, dass mehrere Flügel in gleichmäßigen Abständen in Umfangsrichtung am Außenrand des Rotors angeordnet sind, mehrere Segmente in gleichmäßigen Abständen in Umfangsrichtung am Innenrand des Gehäuses angeordnet sind, der Raum für Ölkammern durch die Flügel und die Segmente in mehrere Ölkammern unterteilt ist, ein Ausgleichsloch, das sich zu der oberen und der unteren Endfläche des Rotors hin öffnet, vorhanden ist, ein ringförmiger Schlitz an der inneren Bodenfläche des Gehäuses bzw. der unteren Fläche der oberen Abdeckung so ausgebildet ist, dass er den Endflächen des Rotors zugewandt ist, und eine Ringdichtung, die aus elastischem Material besteht, in den ringförmigen Schlitzen jeweils so angeordnet ist, dass ihre Dichtungsfläche der Endfläche des Rotors mit ordnungsgemäßem Kontaktdruck zugewandt ist,
die Ringdichtung aus einem zylindrischen Abschnitt, der in die Außenrandseite eines Ringschlitzes eingesetzt ist, einer Ringlippe, die von dem zylindrischen Abschnitt zu der Innenseite hin radial so weit vorsteht, dass sie bis zu der seitlichen Fläche des Ringschlitzes reicht, und so, dass ihr vorderer Abschnitt in dem freien Zustand vertikal über die Endfläche des zylindrischen Abschnitts zu der Seite der Endfläche des Rotors hin vorsteht, und einer unteren Ringlippe besteht, die von dem zylindrischen Abschnitt zu der Innenseite hin radial so weit vorsteht, dass sie bis zu der seitlichen Fläche des Ringschlitzes reicht, und so, dass ihr vorderer Abschnitt in dem freien Zustand vertikal über eine andere Endfläche des zylindrischen Abschnitts zu der Seite der Bodenfläche des Ringschlitzes hin vorsteht, ein fester Raum zwischen der Ringlippe und der unteren Ringlippe ausgebildet ist, das Ausgleichsloch kommunizierend mit den Ölkammern der Druckseite verbunden ist und die Öffnungen des Ausgleichslochs so angeordnet sind, dass sie innerhalb der Innenrandkanten der Ringschlitze liegen.

3. Dichtungskonstruktion einer Drehflügel-Ruderanlage, **dadurch gekennzeichnet, dass**:
bei einer Drehflügel-Ruderanlage, die aus einem Rotor, in den ein Ruderschaft eingesetzt ist, einem Gehäuse, das den Rotor aufnimmt und Raum für Ölkammern am Umfang des Rotors bildet, und einer ringförmigen oberen Abdeckung besteht, die an einer oberen Öffnung des Gehäuses angeordnet ist, und die so aufgebaut ist, dass mehrere Flügel in gleichmäßigen Abständen in Umfangsrichtung am Außenrand des Rotors angeordnet sind, mehrere Segmente in gleichmäßigen Abständen in Umfangsrichtung am Innenrand des Gehäuses angeordnet sind, der Raum für Ölkammern durch die Flügel und die Segmente in mehrere Ölkammern unterteilt ist, ein Ausgleichsloch, das sich zu der oberen und der unteren Endfläche des Rotors hin öffnet, vorhanden ist, ein ringförmiger Schlitz an der inneren Bodenfläche des Gehäuses bzw. der unteren Fläche der oberen Abdeckung so ausgebildet ist, dass er den Endflächen des Rotors zugewandt ist, und eine Ringdichtung, die aus elastischem Material besteht, in den ringförmigen Schlitzen jeweils so angeordnet ist, dass ihre Dichtungsfläche der Endfläche des Rotors mit ordnungsgemäßem Kontaktdruck zugewandt ist,
die Ringdichtung aus einem Ringabschnitt, der in das Innere eines Ringschlitzes an seiner Oberflächenseite eingesetzt ist, einer äußeren Ringschürze, die über den gesamten Umfang von dem Ringabschnitt an ihrer Endfläche, die dem Außenrand des Ringschlitzes zugewandt ist, zu der Bodenfläche des Ringschlitzes hin axial soweit vorsteht, dass sie bis zu der Bodenfläche des Ringschlitzes reicht, und so, dass ihr vorderer Abschnitt in dem freien Zustand radial über den Außenrand des Ringabschnitts zu der äußeren Seitenfläche des Ringschlitzes hin vorsteht, sowie einer inneren Ringschürze besteht, die über den gesamten Umfang von dem Ringabschnitt an ihrem Ende, das dem Innenrand des Ringschlitzes zugewandt ist, zu der Bodenfläche des Ringschlitzes hin axial soweit vorsteht, dass sie bis zu der Bodenfläche des Ringschlitzes reicht, und so, dass ihr vorderer Abschnitt in dem freien Zustand radial über den Innenrand des Ringabschnitts zu der inneren seitlichen Fläche des Ringschlitzes hin vorsteht, wobei die Ringdichtung mit Vertiefungen in fester Breite in entsprechender Anzahl über den gesamten Umfang an dem Innenrand so versehen ist, dass sie sich von der Oberkante des Ringabschnitts zu der Unterkante der inneren Ringschürze erstrecken, wobei die Vertiefungen kommunizierend mit dem Raum zwischen der äußeren Ringschürze und der inneren Ringschürze verbunden sind; das Ausgleichsloch kommunizierend mit den Ölkammern der Druckseite verbunden ist und die Öffnungen des Ausgleichslochs so angeordnet sind, dass sie innerhalb der Innenrandkanten der Ringschlitze liegen.

4. Dichtungskonstruktion einer Drehflügel-Ruderanlage nach Anspruch 3, **dadurch gekennzeichnet, dass** die Ringdichtung mit Vertiefungen in fester Breite in entsprechender Anzahl über den gesamten Umfang an dem Innenrand der Ringdichtung so versehen ist, dass sich die Vertiefungen von der Oberkante des Ringabschnitts zu der Unterkante der inneren Ringschürze erstrecken, und des Weiteren mit einer Ringnut in fester Breite versehen ist, mit der die jeweiligen Vertiefungen an einem Teil des Ringabschnitts kommunizierend verbunden sind.

5. Dichtungskonstruktion einer Drehflügel-Ruderanlage nach einem der Ansprüche 1 bis 4, **dadurch gekennzeichnet, dass** das Ausgleichsloch des Rotors, das sich zu der oberen und der unteren Endfläche des Rotors an dem inneren Teil der Innenrandkante des Ringschlitzes für die Ringdichtung öffnet, so angeordnet ist, dass es innerhalb der vertikalen Mittelebene des Flügels liegt, und ein Ausgleichsloch-Verbindungsloch, das das Loch für kommunizierende Verbindung der Ölkammer mit dem Ausgleichsloch kommunizierend verbindet, an dem Loch für kommunizierende Verbindung der Ölkammer des Flügels so vorhanden ist, dass es konzentrisch zu dem Loch für kommunizierende Verbindung für den vertikalen Schlitz des Flügels ist.

6. Dichtungskonstruktion einer Drehflügel-Ruderanlage, **dadurch gekennzeichnet, dass**:
bei einer Drehflügel-Ruderanlage, die aus einem Rotor, in den ein Ruderschaft eingesetzt ist, einem Gehäuse, das den Rotor aufnimmt und Raum für Ölkammern am Umfang des Rotors hält, und einer ringförmigen oberen Abdeckung besteht, die an einer oberen Öffnung des Gehäuses angeordnet ist, und die so aufgebaut ist, dass mehrere Flügel in gleichmäßigen Abständen in einer Umfangsrichtung am Außenrand des Rotors angeordnet sind, mehrere Segmente in gleichmäßigen Abständen in Umfangsrichtung am Innenrand des Gehäuses angeordnet sind, der Raum für Ölkammern durch die Flügel und die Segmente in mehrere Ölkammern unterteilt ist,
ein Paar vertikaler Schlitze in der vertikalen Richtung an der vorderen Fläche der Segmente so ausgebildet ist, dass sie dem Außenrand des Rotors zugewandt sind, vertikale Dichtungen, die aus elastischem Material bestehen, jeweils symmetrisch in den vertikalen Schlitzen so angeordnet sind, dass eine Dichtungsfläche der jeweiligen vertikalen Dichtung mit dem Außenrand des Rotors mit ordnungsgemäßem Kontaktdruck in Kontakt kommt, wobei die jeweilige vertikale Dichtung aus einer Basis, die in dem vertikalen Schlitz an der Seite des Segment-Mittelpunktes angeordnet ist, einer ersten Lippe, die von der Basis zu der Außenseite des Segmentes hin tangential so weit vorsteht, dass sie bis zu der seitlichen Fläche des vertikalen Schlitzes reicht, so dass ein geringfügiger Zwischenraum verbleibt, und so, dass ihr vorderer Abschnitt in dem freien Zustand radial über die Endfläche der Basis zu dem Außenrand des Rotors hin vorsteht, sowie einer zweiten Lippe besteht, die von der Basis zu der Außenseite des Segmentes hin tangential so weit vorsteht, dass sie bis zu der seitlichen Fläche des vertikalen Schlitzes reicht, und so, dass ihr vorderer Abschnitt in dem freien Zustand radial über eine andere Endfläche der Basis zu der Bodenfläche des vertikalen Schlitzes hin vorsteht, und ein fester Raum zwischen der ersten Lippe und der zweiten Lippe ausgebildet ist.

7. Dichtungskonstruktion einer Drehflügel-Ruderanlage nach Anspruch 6, **dadurch gekennzeichnet, dass** ein starres Kernelement in die Basis der vertikalen Dichtung in der axialen Richtung eingebettet ist, wobei der obere und der untere Endabschnitt der vertikalen Dichtung unverändert belassen werden, und dass die vertikale Dichtung in dem freien Zustand geringfügig länger ausgebildet ist als der vertikale Schlitz.

## Revendications

1. Structure d'étanchéité d'un appareil à gouverner à palettes, **caractérisée en ce que** :
dans un appareil à gouverner à palettes, constitué d'un rotor dans lequel est introduite une mèche de gouvernail, d'un boîtier abritant le rotor et constituant un espace pour des chambres à huile dans les circonférences du rotor, et d'un carter supérieur annulaire disposé au niveau d'une ouverture supérieure du carter, et est constitué de sorte que plusieurs palettes sont disposées à intervalles égaux le long de la direction circonférentielle de la périphérie extérieure du rotor, plusieurs segments sont disposés à intervalles égaux le long de la direction circonférentielle de la périphérie intérieure du carter, ledit espace pour des chambres à huile est scindé en plusieurs chambres à huile par les palettes et les segments, un trou d'équilibrage s'ouvrant sur les faces d'extrémité supérieure et inférieure du rotor est réalisé, une fente annulaire est réalisée sur la surface inférieure intérieure du carter et sur la surface inférieure du carter supérieur, respectivement, afin de se trouver en opposition aux faces d'extrémité du rotor, et un joint annulaire, constitué d'un matériau élastique, est disposé dans les fentes annulaires, respectivement, de sorte que leurs faces d'étanchéité se trouvent au contact de la face d'extrémité du rotor avec une pression de contact appropriée,
une gorge annulaire est réalisée sur le côté extérieur du bas d'une fente annulaire ; un joint annulaire est constitué d'une partie cylindrique introduite dans la gorqe annulaire, et d'une lèvre annulaire, faisant saillie selon une direction radiale à partir de la partie cylindrique, en direction du côté intérieur, jusqu'à atteindre la face latérale de la fente annulaire, et de manière à ce que sa partie d'extrémité se prolonge verticalement au-dessus de la face d'extrémité de la partie cylindrique en direction de la face d'extrémité du rotor, dans un état libre ; le trou d'équilibrage est relié de manière à communiquer avec les chambres à huile du côté pression ; et les ouvertures du trou d'équilibrage sont disposées à l'intérieur des bordures périphériques intérieures des fentes annulaires.

2. Structure d'étanchéité d'un appareil à gouverner à palettes, **caractérisée en ce que** :
dans un appareil à gouverner à palettes, constitué d'un rotor dans lequel est introduite une mèche de gouvernail, d'un boîtier abritant le rotor et constituant un espace pour des chambres à huile dans les circonférences du rotor, et d'un carter supérieur annulaire disposé au niveau d'une ouverture supérieure du carter, et est constitué de sorte que plusieurs palettes sont disposées à intervalles égaux le long de la direction circonférentielle de la périphérie extérieure du rotor, plusieurs segments sont disposés à intervalles égaux le long de la direction circonférentielle de la périphérie intérieure du carter, ledit espace pour des chambres à huile est scindé en plusieurs chambres à huile par les palettes et les segments, un trou d'équilibrage s'ouvrant sur les faces d'extrémité supérieure et inférieure du rotor est réalisé, une fente annulaire est réalisée sur la surface inférieure intérieure du carter et sur la surface inférieure du carter supérieur, respectivement, afin de se trouver en opposition aux faces d'extrémité du rotor, et un joint annulaire, constitué de matériaux élastiques, est disposé dans les fentes annulaires, respectivement, de sorte que leurs faces d'étanchéité se trouvent au contact de la face d'extrémité du rotor avec une pression de contact appropriée,
le joint annulaire est constitué d'une partie cylindrique introduite dans la partie périphérique extérieure d'une fente annulaire, d'une lèvre annulaire faisant saillie selon une direction radiale à partir de la partie cylindrique en direction du côté intérieur jusqu'à atteindre la face latérale de la fente annulaire, et de manière à ce que sa partie d'extrémité se prolonge verticalement au-dessus de la face d'extrémité de la partie cylindrique en direction du côté de la face d'extrémité du rotor, dans un état libre ; et d'une lèvre annulaire inférieure, faisant saillie selon une direction radiale à partir de la partie cylindrique en direction du côté intérieur jusqu'à atteindre la face latérale de la fente annulaire, et de manière à ce que sa partie d'extrémité se prolonge verticalement au-dessus d'une autre face d'extrémité de la partie cylindrique, en direction du côté de la surface inférieure de la fente annulaire, dans un état libre ; un espace fixe est constitué entre la lèvre annulaire et la lèvre annulaire inférieure ; le trou d'équilibrage est relié de manière à communiquer avec les chambres à huile du côté pression ; et les ouvertures du trou d'équilibrage sont disposées à l'intérieur des bordures périphériques intérieures des fentes annulaires.

3. Structure d'étanchéité d'un appareil à gouverner à palettes, **caractérisée en ce que** :
dans un appareil à gouverner à palettes, constitué d'un rotor dans lequel est introduite une mèche de gouvernail, d'un boîtier abritant le rotor et constituant un espace pour des chambres à huile dans les circonférences du rotor, et d'un carter supérieur annulaire disposé au niveau d'une ouverture supérieure du carter, et est constitué de sorte que plusieurs palettes sont disposées à intervalles égaux le long de la direction circonférentielle de la périphérie extérieure du rotor, plusieurs segments sont disposés à intervalles égaux le long de la direction circonférentielle de la périphérie intérieure du carter, ledit espace pour des chambres à huile est scindé en plusieurs chambres à huile par les palettes et les segments, un trou d'équilibrage s'ouvrant sur les faces d'extrémité supérieure et inférieure du rotor est réalisé, une fente annulaire est réalisée sur la surface inférieure intérieure du carter et sur la surface inférieure du carter supérieur, respectivement, afin de se trouver en opposition aux faces d'extrémité du rotor, et un joint annulaire, constitué de matériaux élastiques, est disposé dans les fentes annulaires, respectivement, de sorte que leurs faces d'étanchéité se trouvent au contact de la face d'extrémité du rotor avec une pression de contact appropriée,
le joint annulaire est constitué d'une partie annulaire placée à l'intérieur d'une fente annulaire, sur son côté de surface, d'une jupe annulaire extérieure, se prolongeant dans la direction de l'axe sur l'intégralité de la circonférence à partir de la partie annulaire, au niveau de son extrémité se trouvant en opposition avec la périphérie extérieure de la fente annulaire, jusqu'à atteindre la surface inférieure de la fente annulaire, et de manière à ce que sa partie d'extrémité se prolonge radialement au-dessus de la périphérie extérieure de la partie annulaire en direction de la face latérale extérieure de la fente annulaire, dans un état libre, et d'une jupe annulaire intérieure, se prolongeant dans la direction de l'axe sur l'intégralité de la circonférence à partir de la partie annulaire, au niveau de son extrémité se trouvant en opposition avec la périphérie intérieure de la fente annulaire en direction de la surface inférieure de la fente annulaire, jusqu'à atteindre la surface inférieure de la fente annulaire, et de manière à ce que sa partie d'extrémité se prolonge radialement au-dessus de la périphérie intérieure de la partie annulaire, en direction de la face latérale intérieure de la fente annulaire, dans un état libre ; le joint annulaire est muni de retraits, de largeur fixe et en nombre approprié, sur l'intégralité de la circonférence de la périphérie intérieure, afin de s'étendre entre la bordure supérieure de la partie-annulaire et la bordure inférieure de la jupe intérieure annulaire ; les retraits sont reliés de manière à communiquer avec l'espace situé entre la jupe annulaire extérieure et la jupe annulaire intérieure ; le trou d'équilibrage est relié de manière à communiquer avec les chambres à huile du côté pression ; et les ouvertures du trou d'équilibrage sont disposées à l'intérieur des bordures périphériques intérieures des fentes annulaires.

4. Structure d'étanchéité d'un appareil à gouverner à palettes selon la revendication 3, **caractérisée en ce que** le joint annulaire est muni de retraits, de largeur fixe et en nombre approprié, sur l'intégralité de la circonférence de la périphérie intérieure du joint annulaire, de sorte que les retraits s'étendent entre la bordure supérieure de la partie annulaire et la bordure inférieure de la jupe intérieure annulaire, et est également muni d'une gorge annulaire de largeur fixe, avec laquelle les retraits respectifs sont reliés afin de communiquer avec une partie de la partie annulaire.

5. Structure d'étanchéité d'un appareil à gouverner à palettes selon l'une quelconque des revendications 1 à 4, **caractérisée en ce que** le trou d'équilibrage du rotor, qui s'ouvre sur les faces d'extrémité supérieure et inférieure du rotor, au niveau de la partie intérieure de la bordure périphérique intérieure de la fente annulaire du joint annulaire, est disposé afin de se trouver dans le plan central vertical de la palette, et un trou d'équilibrage de liaison avec le trou qui relie de manière à communiquer le trou de communication de chambre à huile avec le trou d'équilibrage est ménagé au niveau du trou de communication de chambre à huile de la palette afin de se trouver en position concentrique avec le trou de communication de la fente verticale de la palette.

6. Structure d'étanchéité d'un appareil à gouverner à palettes, **caractérisée en ce que** :
dans un appareil à gouverner à palettes, constitué d'un rotor dans lequel est introduite une mèche de gouvernail, d'un boîtier abritant le rotor et constituant un espace pour des chambres à huile dans les circonférences du rotor, et d'un carter supérieur annulaire disposé au niveau d'une ouverture supérieure du carter, et est constitué de sorte que plusieurs palettes sont disposées à intervalles égaux le long de la direction circonférentielle de la périphérie extérieure du rotor, plusieurs segments sont disposés à intervalles égaux le long de la direction circonférentielle de la périphérie intérieure du carter, ledit espace pour des chambres à huile est scindé en plusieurs chambres à huile par les palettes et les segments,
une paire de fentes verticales est réalisée dans la direction verticale, sur la face d'extrémité des segments, afin qu'elle se trouve en opposition à la périphérie extérieure du rotor ; des joints verticaux,
constitués d'un matériau élastique, sont disposées symétriquement dans les fentes verticales, respectivement, de telle sorte qu'une face de joint du joint vertical respectif se trouve au contact de la périphérie extérieure du rotor avec une pression de contact appropriée ; le joint vertical respectif est constitué d'une base, disposée dans la fente verticale du côté du centre du segment, d'une première lèvre qui s'étend tangentiellement entre la base et l'extérieur du segment jusqu'à atteindre la face latérale de la fente verticale, en ménageant un petit espace, et de telle sorte que sa partie d'extrémité se prolonge radialement au-dessus de la face d'extrémité de la base, en direction de la périphérie extérieure du rotor, dans un état libre, et d'une seconde lèvre qui s'étend tangentiellement entre la base et l'extérieur du segment jusqu'à atteindre la face latérale de la fente verticale, et de telle sorte que sa partie d'extrémité se prolonge radialement au-dessus d'une autre face d'extrémité de la bave, en direction de la surface inférieure de la fente verticale dans un état libre, et un espace fixe est ménagé entre la première lèvre et la seconde lèvre.

7. Structure d'étanchéité d'un appareil à gouverner à palettes, selon la revendication 6, **caractérisée en ce qu'**un élément central rigide est noyé dans la base du joint vertical, selon la direction axiale, les parties d'extrémité supérieure et inférieure du joint vertical étant laissées en l'état, et **en ce que** le joint vertical est réalisé de manière à être légèrement plus long que la fente verticale, dans un état libre.
